# EUROPÄISCHE PATENTSCHRIFT

(11) **EP 3 507 151 B1**
(45) Veröffentlichungstag und Bekanntmachung des Hinweises auf die Patenterteilung: **27.05.2020**
(21) Anmeldenummer: 17742160.9
(22) Anmeldetag: 17.07.2017
(51) Int. Cl.: B60T 13/68, B60T 13/66

(54) **ELEKTRONISCH STEUERBARES PNEUMATISCHES BREMSSYSTEM IN EINEM NUTZFAHRZEUG SOWIE VERFAHREN ZUM ELEKTRONISCHEN STEUERN EINES PNEUMATISCHEN BREMSSYSTEMS IN EINEM NUTZFAHRZEUG**
ELECTRONICALLY CONTROLLABLE PNEUMATIC BRAKE SYSTEM IN A UTILITY VEHICLE AND METHOD FOR ELECTRONICALLY CONTROLLING A PNEUMATIC BRAKE SYSTEM IN A UTILITY VEHICLE
SYSTÈME DE FREINAGE PNEUMATIQUE À COMMANDE ÉLECTRONIQUE DANS UN VÉHICULE UTILITAIRE, ET PROCÉDÉ DE COMMANDE ÉLECTRONIQUE D'UN SYSTÈME DE FREINAGE PNEUMATIQUE DANS UN VÉHICULE UTILITAIRE

(30) Priorität: 31.08.2016 DE 102016010462
(43) Veröffentlichungstag der Anmeldung: 10.07.2019
(73) Patentinhaber: WABCO Europe BVBA, 1170 Brussels (BE)
(72) Erfinder: WULF, Oliver, 31535 Neustadt (DE)
(74) Vertreter: Rabe, Dirk-Heinrich
(86) Internationale Anmeldenummer: PCT/EP2017/000861
(87) Internationale Veröffentlichungsnummer: WO 2018/041386

(56) Entgegenhaltungen:
- DE-A1-102010 050 578
- DE-A1-102010 050 580
- DE-C1- 10 149 918

## Beschreibung

Die Erfindung betrifft ein elektronisch steuerbares pneumatisches Bremssystem in einem Nutzfahrzeug sowie ein Verfahren zum elektronischen Steuern eines pneumatischen Bremssystems.

In Fahrzeugen, insbesondere Nutzfahrzeugen, mit einem pneumatischen Bremssystem können zum Aussteuern von Bremsdrücken von einer Steuereinrichtung (ECU) elektronisch den Fahrzeugachsen zugeordnete Achsmodulatoren angesteuert werden. Die elektronische Ansteuerung findet dabei entweder in Abhängigkeit eines durch ein Fußbremsventil vorgegebenen Fahrerwunsches oder aber in Abhängigkeit einer automatisiert vorgegebenen Fahrzeug-Soll-Verzögerung statt. Die Achsmodulatoren erzeugen dann pneumatisch einen entsprechenden Betriebsbrems-Bremsdruck, der an Bremszylinder der Betriebsbremsen des Bremssystems ausgesteuert werden.

Alternativ können die Achsmodulatoren auch pneumatisch angesteuert werden, indem vom Fußbremsventil ein dem Fahrerwunsch entsprechender Betriebsbrems-Steuerdruck an die Achsmodulatoren vorgegeben wird, in Abhängigkeit dessen der jeweilige Achsmodulator den entsprechenden Betriebsbrems-Bremsdruck für die Betriebsbremsen durch eine Luftmengenverstärkung erzeugt. In beiden Varianten ist eine ABS-Funktionalität integriert, so dass ein Blockieren der Räder beim Bremsen verhindert werden kann.

Um in derartigen Bremssystemen auch eine automatisiert ansteuerbare Rückfallebene auszubilden, die in einer Notsituation automatisiert eingreifen kann, wenn der Fahrer beispielsweise unaufmerksam oder nicht am Platz ist, sind mehrere Lösungen bekannt. Derartige Lösungen erfordern meist eine Vielzahl an zusätzlichen pneumatischen Komponenten, da bei diesen Lösungen auch eine abgestufte Vorgabe einer Bremsung vorgesehen ist. Auch weitere aufwändige Lösungen, die eine elektrisch redundante Ansteuerung ermöglichen, sind bekannt, beispielsweise über eine elektropneumatische Ansteuerung einer Parkbremse. Nachteilig bei all diesen Lösungen ist, dass die zusätzlichen pneumatischen Komponenten den Montage- und Kostenaufwand erhöhen und zudem nur sehr umständlich nachzurüsten sind.

Die DE 10 2013 015 949 A1 beschreibt dazu ein Bremssystem zur Kurvenunterstützung, wobei vorgesehen ist, mit einem elektronisch gesteuerten Mehrwegeventil einen Betriebsbrems-Bremsdruck an Betriebsbremsen des Bremssystems auszusteuern, wobei ein Betriebsbrems-Bremsdruck auch dann ausgesteuert wird, wenn von einem Fußbremsventil als Bremswertgeber keine Bremsanforderung vorliegt. Das Mehrwegeventil und das Fußbremsventil sind über ein Wechselventil (Select-High-Ventil) auf ein Relaisventil geschaltet, das den Betriebsbrems-Bremsdruck an die Betriebsbremsen aussteuert. Das Wechselventil gibt hierbei lediglich den höheren der beiden Drücke vom Fußbremsventil oder dem Mehrwegeventil an das Relaisventil weiter, so dass die elektronische Bremsanforderung des Mehrwegeventils durch das Fußbremsventil übersteuert werden kann.

Die DE 10 2010 050 578 A1 oder die DE 10 2010 050 580 A1 zeigen eine Bremsanlage, bei der über ein Fußbremsventil bzw. eine Bremspedaleinrichtung eine Bremsanforderung vorgegeben wird. Diese wird in einer Steuereinrichtung in ein elektronisches Signal umgewandelt und mit dem elektronischen Signal ein Achsmodulator angesteuert, das den Betriebsbrems-Bremsdruck an die Betriebsbremsen aussteuert. Fällt die Elektronik aus, wird im Redundanzfall der Achsmodulator pneumatisch über Druckluftleitungen mit einem Betriebsbrems-Steuerdruck angesteuert und darüber ein Betriebsbrems-Bremsdruck an die Betriebsbremsen ausgegeben. Der Achsmodulator weist dazu drei Magnetventile sowie ein Relaisventil auf. Je nach Stellung der Magnetventile wird als Betriebsbrems-Steuerdruck der vom Fußbremsventil vorgegebene Betätigungsdruck, der Vorratsdruck aus dem Druckmittelvorrat oder der Atmosphärendruck aus einer Entlüftung verwendet. Dadurch kann der Betriebsbrems-Bremsdruck je nach elektronisch vorgegebener Schaltstellung der drei Magnetventile in Abhängigkeit einer manuellen oder elektrischen Vorgabe erhöht, gehalten oder reduziert werden.

Die WO 2016/045652 A1 zeigt eine elektropneumatische Betriebsbremseinrichtung mit einem Fußbremsventil, dessen Bremspedalstellung sensiert werden kann und dessen ausgegebener Betätigungsdruck zum Ansteuern der Achsmodulatoren unabhängig von einer Bremspedalstellung modifiziert werden kann. Dazu ist eine Magnetventileinrichtung mit beispielsweise zwei 3/2-Wegeventilen vorgesehen, die je nach elektronischer Anforderung einen Fußbrems-Eingangsdruck in das Fußbremsventil einleitet. Über ein zusätzliches Halteventil wird der wirkende Fußbrems-Eingangsdruck gehalten. Durch den wirkenden Fußbrems-Eingangsdruck wird im Fußbremsventil pneumatisch ein Steuerkolben mechanisch bewegt, so dass vom Fußbremsventil ein der pneumatischen Betätigung entsprechender Betätigungsdruck ausgesteuert wird, der als Betriebsbrems-Steuerdruck an die Achsmodulatoren weitergeleitet wird. Dadurch kann im Redundanzfall, d.h. wenn die elektrische Ansteuerung der Betriebsbremsen fehlschlägt, und wenn keine manuelle Betätigung durch den Fahrer vorliegt über das Fußbremsventil und dessen pneumatischen Kanal eine Bremsung bewirkt werden. Somit liegt quasi eine elektronisch gesteuerte, mechano-pneumatische Betätigung des Fußbremsventils vor.

Eine weitere mechanische Betätigung des Fußbremsventils ist beispielsweise in US 7 520 572 B2 und EP 1 730 006 B1 gezeigt. Hierbei ist jeweils ein Verfahren gezeigt, bei dem das Fußbremsventil zusätzlich zum Bremspedal von einer elektronischen Steuereinrichtung betätigt werden kann. Demnach ist ein elektronisches Bremssystem vorgesehen, dessen Betriebsbremsen durch das Fußbremsventil und über ein zusätzliches Relaisventil angesteuert werden. Die Bremsanforderung kann zum einen über das Bremspedal auf das Fußbremsventil vorgegeben werden oder aber unabhängig davon über einen Bremsventilaktuator, der zwischen dem Bremspedal und dem Fußbremsventil angeordnet ist. Der Bremsventilaktuator wird durch die elektronische Steuereinrichtung gesteuert, indem bei Vorliegen eines Steuersignals zum Abbremsen des Fahrzeuges ein Regeldruck an den Bremsventilaktuator ausgesteuert wird, der beispielsweise als ein pneumatisches Ventil ausgeführt ist, so dass das Fußbremsventil betätigt wird.

In DE 10 2013 015 971 A1 ist eine Bremsvorrichtung beschrieben, bei der das Fußbremsventil über ein Wegeventil mit den Betriebsbremsen pneumatisch verbunden ist. In einer ersten Schaltstellung des Wegeventils wird der vom Fußbremsventil durch manuelle Betätigung erzeugte Betätigungsdruck direkt an die Betriebsbremsen ausgegeben. In einer zweiten Schaltstellung wird zwischen das Fußbremsventil und die Betriebsbremsen ein Rückschlagventil geschaltet. Das Rückschlagventil ermöglicht ein vom Fußbremsventil bewirktes Druckerhöhen an den Betriebsbremsen, verhindert allerdings ein Druckreduzieren bzw. Entlüften der Betriebsbremsen und sorgt somit für ein Halten des aufgebauten Betriebsbrems-Bremsdruckes.

In EP 2 532 559 B1 ist ein Bremssystem beschrieben, das zwei als 2/2-Wegeventile ausgeführte Bypass-Ventile sowie zumindest ein Select-High-Ventil aufweist. Die Bypass-Ventile können in Abhängigkeit eines gemessenen Betriebsbrems-Steuerdruckes elektronisch derartig umgeschaltet werden, dass ein vom Druckmittelvorrat einströmendes Druckmittel mit einem Vorratsdruck oder eine Entlüftung mit dem Select-High-Ventil kurzgeschlossen werden. Dadurch kann ein elektrisch gesteuertes Druckerhöhen oder Druckreduzieren des Betriebsbrems-Bremsdruckes erreicht werden. Durch eine entsprechende Schaltstellung der Bypass-Ventile kann der Betriebsbrems-Steuerdruck auch gehalten werden. Ergänzend wird auch der vom Fahrer durch Betätigung des Fußbremsventils vorgegebene Betätigungsdruck an das Select-High-Ventil geleitet. Das Select-High-Ventil steuert dann den höheren der beiden anliegenden Drücke an die Betriebsbremsen aus, d.h. entweder den von dem entsprechenden Bypass-Ventil bereitgestellten Vorrats- bzw. Fußbrems-Eingangsdruck oder den Betätigungsdruck. Somit kann mit zwei Bypass-Ventilen und einem Select-High-Ventil elektronisch gesteuert ein Druckerhöhen, ein Druckhalten oder ein Druckreduzieren erreicht werden, wenn keine manuelle Fahrerbetätigung vorliegt.

EP 2 055 541 B1 beschreibt ein Fahrerassistenzsystem mit einem bistabilen und einem monostabilen Bypass-Ventil. Über das bistabile Bypass-Ventil kann ein Federspeicher einer Feststellbremse belüftet oder entlüftet werden, indem bei entsprechender Schaltstellung des bistabilen Bypass-Ventils entweder der Druckmittelvorrat zum Lösen des Federspeichers oder eine Entlüftung zum Zuspannen des Federspeichers mit einem pneumatischen Steuereingang eines Achsmodulators verbunden werden. Zwischen dem bistabilen Bypass-Ventil und dem Achsmodulator ist das monostabile Bypass-Ventil angeordnet, das in einer Schaltstellung den vom bistabilen Bypass-Ventil ausgegebenen Parkbrems-Steuerdruck an den Achsmodulator durchlässt und sonst eine Strömungsverbindung verhindert. D.h. in der zweiten Schaltstellung des monostabilen Bypass-Ventils wird der vorherrschende Parkbrems-Steuerdruck am Achsmodulator gehalten.

Es ist Aufgabe der Erfindung, ein elektronisch steuerbares pneumatisches Bremssystem in einem Nutzfahrzeug bereitzustellen, mit dem mit wenig Aufwand eine sichere und zuverlässige elektronisch gesteuerte redundante Bremsung, insbesondere in einem automatisiert gesteuerten Fahrzeug, gewährleistet werden kann. Weiterhin ist Aufgabe der Erfindung, ein Verfahren zum elektronischen Steuern eines derartigen Bremssystems in einem Nutzfahrzeug anzugeben.

Diese Aufgabe wird durch ein elektronisch steuerbares pneumatisches Bremssystem nach Anspruch 1 und ein Verfahren nach Anspruch 12 gelöst. Bevorzugte Weiterbildungen sind in den Unteransprüchen angegeben.

Erfindungsgemäß wird demnach erkannt, dass es in einem Fahrzeug, insbesondere in einem automatisiert steuerbaren Nutzfahrzeug, bei einem Ausfall oder einem Defekt in der elektrischen Ansteuerung bzw. elektrisch gesteuerten Betätigung von Betriebsbremsen des Fahrzeuges lediglich darauf ankommt, dass das Fahrzeug sicher in einen abgebremsten Zustand überführt werden kann. Demnach können Komponenten, die in einem derartigen Fehlerfall bzw. Redundanzfall für ein schnelles und sicheres Abbremsen des Fahrzeuges gerade nicht nötig sind, insbesondere Komponenten, die für eine fein abgestufte Bremsung oder ein ruckarme Bremsung oder ein Feststellen einer Bremswirkung oder die für einen geringen Verschleiß, einen geringen Luftverbrauch oder eine geringe Geräuschentwicklung sorgen, entfallen. Denn der Redundanzfall stellt lediglich einen Ausnahmefall dar, der nur sehr selten während der Lebensdauer des Fahrzeuges auftritt, so dass es bei den für den Redundanzfall relevanten Komponenten beispielsweise nicht auf die Geräuschentwicklung oder einen verschleißarmen Betrieb ankommt.

Erfindungsgemäß ist dazu vorgesehen, in einem von einem Fußbremsventil ausgehenden pneumatischen Pfad ein monostabiles Bypass-Ventil anzuordnen, das vorzugsweise als ein elektrisch steuerbares 3/2-Wegeventil ausgeführt ist und im Redundanzfall von einer Bypass-Steuereinrichtung (Bypass-ECU) über ein Bypass-Signal angesteuert werden kann. Das monostabile Bypass-Ventil kann in Abhängigkeit einer elektrischen Anforderung über das Bypass-Signal zwischen zwei Schaltstellungen umgeschaltet werden, wobei über die Schaltstellungen ausgewählt wird, ob Radbremsen bzw. Betriebsbremsen des Fahrzeuges über den pneumatischen Pfad ein Betriebsbrems-Bremsdruck zugeführt wird, der in Abhängigkeit einer manuellen Betätigung des Fußbremsventils und/oder in Abhängigkeit eines in einem Druckmittelvorrat vorherrschenden Vorratsdruckes erzeugt wird.

Unter einem pneumatischen Pfad wird eine pneumatische Verbindung zwischen dem Fußbremsventil und einer Betriebsbremse des Fahrzeuges verstanden, über die die jeweilige Betriebsbremse mit einem bestimmten Betriebsbrems-Bremsdruck versorgt werden kann. Bei beispielsweise vier pneumatisch über das Fußbremsventil betätigbaren Betriebsbremsen in einem Fahrzeug sind vier derartige pneumatische Pfade vorgesehen. Den pneumatischen Pfaden einer bestimmten Fahrzeugachse ist ein Achsmodulator zugeordnet, der einen über die entsprechend pneumatischen Pfade übertragenen Betriebsbrems-Steuerdruck luftmengenverstärkt und diesen luftmengenverstärkten Achsmodulator-Druck als Betriebsbrems-Bremsdruck an den jeweiligen pneumatischen Pfad zur Ansteuerung der jeweiligen Betriebsbremse wieder ausgibt. Das monostabile Bypass-Ventil kann dabei im jeweiligen pneumatischen Pfad vor oder nach dem Achsmodulator angeordnet sein, um entweder den Betriebsbrems-Steuerdruck oder den Betriebsbrems-Bremsdruck in Abhängigkeit der eingestellten Schaltstellung vorzugeben.

Somit wird vorteilhafterweise durch lediglich ein zusätzliches monostabiles Bypass-Ventil im pneumatischen Pfad zwischen dem Fußbremsventil und der jeweiligen Betriebsbremse erreicht, dass im Redundanzfall, d.h. bei einem Ausfall oder einem Defekt in der elektrisch gesteuerten Betätigung der Betriebsbremsen, entweder ausschließlich eine manuell oder automatisch vorgegebene Bremsanforderung auf pneumatisch redundantem Wege durchgesetzt wird oder aber eine elektropneumatische redundante Umsetzung einer Bremsung durch eine elektrisch redundante Ansteuerung des monostabilen Bypass-Ventils erfolgt, die dann zumindest teilweise durch den Vorratsdruck vorgegeben wird. Das zusätzliche monostabile Bypass-Ventil im pneumatischen Pfad beeinflusst hierbei den manuellen Betrieb außerhalb der elektrischen oder pneumatischen Redundanz nicht.

Unter einem Ausfall oder einem Defekt in der elektrisch gesteuerten Betätigung der Betriebsbremsen wird beispielsweise verstanden, dass die Achsmodulatoren und/oder eine die Achsmodulatoren elektrisch steuernde Betriebsbrems-Steuereinrichtung (ECU) und/oder eine das Fahrzeug automatisiert steuernde Assistenz-Steuereinrichtung einen Defekt aufweist oder Übertragungsfehler, beispielsweise ein CAN-Timeout, zwischen den einzelnen Komponenten auftreten.

Vorzugsweise ist bei einer Anordnung des monostabilen Bypass-Ventils zwischen dem Fußbremsventil und dem Achsmodulator lediglich ein monostabiles Bypass-Ventil pro Fahrzeugachse erforderlich, da die pneumatischen Pfade zwischen dem Fußbremsventil und dem Achsmodulator zusammenfallen und durch dieselbe pneumatische Steuerleitung verlaufen. Dadurch können vorteilhafterweise Kosten gespart werden.

Ist jedoch eine Anordnung hinter dem Achsmodulator der entsprechenden Fahrzeugachse vorgesehen, so ist jeder Betriebsbremse dieser Fahrzeugachse ein Bypass-Ventil zuzuordnen, da sich die pneumatischen Pfade hinter dem Achsmodulator verzweigen. Somit ist vorteilhafterweise eine radindividuelle Vorgabe eines Betriebsbrems-Bremsdruckes in Abhängigkeit der Schaltstellung des Bypass-Ventils möglich. In dem Fall kann vorteilhafterweise eine elektrisch gesteuerte redundante Lenkbremsung durchgeführt werden, indem die Bypass-Ventile im jeweiligen pneumatischen Pfad von der Bypass-Steuereinrichtung unterschiedlich angesteuert werden.

Um eine sichere elektropneumatische Redundanz auszubilden, sind somit vorteilhafterweise keine kostenintensiven Ventile, beispielsweise mehrere zusammenwirkende bistabile Solenoid-Ventile, die für eine abgestufte Bremsung sorgen, oder ein Select-High-Ventil, das entweder das Druckmittel vom Fußbremsventil bzw. vom Achsmodulator oder vom Druckmittelvorrat durchlässt, nötig. Erfindungsgemäß wird somit erkannt, dass die Wahrscheinlichkeit eines Totalausfalles der elektrischen, automatisierten Ansteuerung der Betriebsbremsen in einem Fahrzeug während der Lebensdauer sehr gering ist und daher eine insbesondere im Hinblick auf eine Geräuschentwicklung beim Umschalten des entsprechenden Ventils, den Druckmittelverbrauch und die Abnutzung der Betriebsbremsen optimierte Lösung nicht zwingend erforderlich ist. All diese Aspekte haben keine Auswirkungen auf eine sichere Abbremsung des Fahrzeuges im Redundanzfall, so dass diese für diesen speziellen Ausnahmefall nicht zu berücksichtigen sind bzw. deren negative Auswirkungen in Kauf genommen werden können, um Kosten zu sparen.

Durch die lediglich zwei Schaltstellungen des monostabilen Bypass-Ventils findet immer auch eine automatische Anpassung des Betriebsbrems-Bremsdruckes an den vorherrschenden Betriebsbrems-Steuerdruck statt. Ein Halten des Betriebsbrems-Bremsdruckes beispielsweise nach einem Umschalten des monostabilen Bypass-Ventils oder nach einer Reduzierung der Bremsanforderung durch den Fahrer ist daher zumindest mit dem monostabilen Bypass-Ventil nicht möglich. Das Bypass-Ventil soll lediglich dafür sorgen, dass im Notfall bei einem Ausfall der elektronischen Ansteuerung der Achsmodulatoren elektronisch redundant über den pneumatischen Pfad ein sicheres Abbremsen des Fahrzeuges in einen sicheren Zustand, insbesondere den Stillstand, erfolgen kann.

Somit kann in einfacher und kostengünstiger Weise bei einem Ausfall in der elektrischen Ansteuerung der Betriebsbremsen bzw. der Achsmodulatoren, durch den eine vom Fußbremsventil oder automatisiert angeforderte Bremsung nicht mehr fehlerfrei bewirkt werden kann, dennoch eine sichere redundante Ansteuerung über die pneumatischen Pfade erfolgen.

Das Bypass-Ventil ist erfindungsgemäß monostabil, d.h. lediglich eine erste Schaltstellung des Bypass-Ventils ist stabil, wobei in der ersten Schaltstellung der Betriebsbrems-Bremsdruck in Abhängigkeit der manuellen Bremsanforderung vorgegeben wird. D.h. im jeweiligen pneumatischen Pfad wird in Abhängigkeit eines vom Fußbremsventil pneumatisch vorgegebenen Betätigungsdruckes ein entsprechender Betriebsbrems-Bremsdruck an die jeweilige Betriebsbremse ausgesteuert, indem das Bypass-Ventil - je nach Position im pneumatischen Pfad - den Betätigungsdruck als Betriebsbrems-Steuerdruck oder den luftmengenverstärkten Achsmodulator-Druck als Betriebsbrems-Bremsdruck durchleitet.

Unter stabil wird hierbei verstanden, dass ohne eine elektrische Ansteuerung des monostabilen Bypass-Ventils über das Bypass-Signal, d.h. das Bypass-Ventil ist unbestromt, automatisch die stabile (erste) Schaltstellung eingestellt wird. Dies kann beispielsweise durch eine entsprechende Federvorspannung erreicht werden.

Dies kann beispielsweise durch ein kostengünstiges elektrisch steuerbares 3/2-Wegeventil, z.B. ein Solenoid-Ventil, mit zwei Schaltstellungen erreicht werden, mit dem die elektropneumatische Redundanzfunktion ausgebildet werden kann, indem dieses beim Bestromen in die zweite Schaltstellung übergeht, in der das Bypass-Ventil - je nach Position im pneumatischen Pfad - den Vorratsdruck als Betriebsbrems-Steuerdruck oder als Betriebsbrems-Bremsdruck durchlässt, und sich sonst in der ersten Schaltstellung befindet, in der das Bypass-Ventil - je nach Position im pneumatischen Pfad - den Betätigungsdruck als Betriebsbrems-Steuerdruck oder den luftmengenverstärkten Achsmodulator-Druck als Betriebsbrems-Bremsdruck durchleitet.

Die erste, stabile Schaltstellung wird hierbei standardmäßig eingestellt, wenn davon ausgegangen werden kann, dass der Fahrer im Redundanzfall noch bremsend eingreifen kann. Die zweite, nicht-stabile Schaltstellung wird hingegen eingestellt, wenn festgestellt wird, dass im Redundanzfall die derzeitige Bremsung nicht ausreicht, weil der Fahrer beispielsweise nicht am Platz ist, unaufmerksam ist oder zu wenig bremst. In dem Fall kann automatisiert über den pneumatischen Pfad eine Bremswirkung erhöht werden, indem über das Bypass-Ventil ein hoher im Druckmittelvorrat vorherrschender Vorratsdruck als Betriebsbrems-Steuerdruck oder als Betriebsbrems-Bremsdruck vorgegeben wird. Dieser sorgt bei kontinuierlich eingestellter zweiter Schaltstellung vorzugsweise für ein vollständiges Anziehen der Betriebsbremsen.

Gemäß einer vorteilhaften Weiterbildung kann mit dem erfindungsgemäßen Aufbau über die Bypass-Steuereinrichtung auch eine abgestufte Einstellung des Betriebsbrems-Bremsdruckes erreicht werden. Dazu kann das Bypass-Ventil beispielsweise gepulst angesteuert werden, d.h. das Bypass-Ventil wird abwechselnd bestromt und nicht bestromt. Vorzugweise wird hierbei das Bypass-Signal pulsweitenmoduliert vorgegeben. Dadurch wird abwechselnd zwischen der ersten und der zweiten Schaltstellung hin und hergewechselt, so dass der Betriebsbrems-Steuerdruck bzw. der Betriebsbrems-Bremsdruck je nach Dauer der eingestellten ersten und zweiten Schaltstellung zwischen der Fahrervorgabe, d.h. dem Betätigungsdruck bzw. dem Achsmodulator-Druck, und dem Vorratsdruck hin und herschwingt, d.h. in Abhängigkeit beider Drücke vorgegeben wird. Es ergibt sich also ein schwingender Verlauf des Betriebsbrems-Steuerdruckes bzw. des Betriebsbrems-Bremsdruckes, der von den Betriebsbremsen in entsprechender Weise in eine ebenfalls pulsierende Bremsung umgesetzt wird.

Vorteilhafterweise kann dadurch eine Art Stotterbremsfunktion ausgebildet werden, durch die das Fahrzeug abwechselnd stärker und weniger stark abgebremst wird, um im Mittel eine bestimmte vorgegebene Fahrzeug-Soll-Verzögerung zu bewirken, mit der das Fahrzeug in den sicheren Zustand überführt wird. Die Stotterbremsfunktion kann vorteilhafterweise dadurch erreicht werden, dass sichergestellt wird, dass bei einer pulsweitenmodulierten Ansteuerung ein Wiederanlaufen eines zum Blockieren neigenden Rades erfolgen kann. Dies ist beispielsweise dann der Fall, wenn der Betriebsbrems-Steuerdruck bzw. der Betriebsbrems-Bremsdruck zumindest für eine Grenz-Zeit von beispielsweise 0,25s unter einen Grenz-Druck von beispielsweise 1bar fällt. In diesem Fall ist sichergestellt, dass ein zum Blockieren neigendes Rad sich wieder dreht.

Dies kann sich positiv auf die Fahrstabilität und die Lenkbarkeit des Fahrzeuges auswirken, denn im Redundanzfall, d.h. bei einem elektronischen Ausfall, ist nicht sichergestellt, dass die im Fahrzeug vorhandene Bremsschlupfregelung über eine ABS-Funktionalität korrekt funktioniert. Diese kann in diesem Ausnahmefall durch die Stotterbremsfunktion ersetzt werden. Dadurch kann auch eine redundante ABS-Funktionalität mit zusätzlichen Komponenten gespart werden. Auch hier wird erkannt, dass für den Ausnahmefall eines elektrischen Defekts Kosten gespart werden können, indem eine einfache Ersatzfunktion ausgebildet wird, die ebenfalls für eine sichere Bremsung sorgen kann.

Durch die Pulsweitenmodulation und das abwechselnde Umschalten wird hierbei kein quasi konstanter mittlerer Betriebsbrems-Steuerdruck eingestellt, mit dem die Betriebsbremsen angesteuert werden. Durch das erfindungsgemäße Alternieren des Betriebsbrems-Steuerdruckes wird zwar im Mittel ebenfalls eine bestimmte Fahrzeug-Soll-Verzögerung erreicht, allerdings bewirkt diese auch ein tatsächlich alternierendes Bremsverhalten, so dass die Fahrstabilität bei einer redundanten elektrischen Ansteuerung im Sinne einer Stotterbremsfunktion erhalten bleibt.

Das durch die gepulste Ansteuerung bewirkte Umschaltverhalten wird hierbei derartig ausgelegt, dass bei einer Stotterbremsung akzeptable Werte für die Fahrzeug-Verzögerung, die Fahrstabilität sowie die Lenkbarkeit eingestellt werden.

Die durchströmten Leitungen und Ventile sorgen hierbei für eine Art Tiefpassfilterung, die dafür sorgt, dass der Betriebsbrems-Steuerdruck oder der Betriebsbrems-Bremsdruck weniger stark ansteigen bzw. abfallen, wenn zwischen den beiden Schaltstellungen hin und hergeschaltet wird. Die Flanken im Verlauf des Betriebsbrems-Steuerdruckes bzw. des Betriebsbrems-Bremsdrucke steigen somit weniger stark an bzw. fallen weniger stark ab; die Stotterbremsung wird durch einen geglätteten Verlauf beruhigt.

Dieses Glätten kann weiter optimiert werden, indem gemäß einer vorteilhaften Weiterbildung der Vorratsdruck druckangepasst wird, so dass vermieden wird, dass der Betriebsbrems-Steuerdruck oder der Betriebsbrems-Bremsdruck bei einem Umschalten in die zweite Schaltstellung des Bypass-Ventils auf einen sehr hohen Vorratsdruck von beispielsweise 12bar ansteigen. Dazu sind mehrere Varianten möglich, die alternativ oder ergänzend vorgesehen sein können:
In der einfachsten Ausführungsform ist zwischen dem Druckmittelvorrat, der in der zweiten Schaltstellung den Betriebsbrems-Steuerdruck oder den Betriebsbrems-Bremsdruck liefert, und dem Bypass-Ventil eine Drossel angeordnet. Diese Drossel reduziert einen Volumenstrom des aus dem Druckmittelvorrat strömenden Druckmittels. Dadurch steigt der Betriebsbrems-Steuerdruck oder der Betriebsbrems-Bremsdruck bei einem Umschalten von der ersten in die zweite Schaltstellung nicht abrupt auf den Vorratsdruck an sondern langsamer, da durch die Drossel eine Engstelle im Strömungspfad ausgebildet wird. Ein Umschalten zurück in die erste Schaltstellung bei einer pulsweitenmodulierten Ansteuerung des Bypass-Ventils erfolgt also zu einem Zeitpunkt, an dem der Betriebsbrems-Steuerdruck oder er Betriebsbrems-Bremsdruck weniger stark angestiegen sind, so dass die Verläufe insgesamt weiter geglättet und die Stotterbremsung beruhigt wird werden.

Gemäß einer weiteren Ausführungsform kann vorgesehen sein, von vornherein einen Druckmittelvorrat zu verwenden, in dem ein geringerer Vorratsdruck vorherrscht. Dazu kann beispielsweise ein für eine Parkbremse vorgesehener dritter Druckmittelvorrat verwendet werden, der einen dritten Vorratsdruck von maximal 8bar aufweist.

Gemäß einer weiteren Ausführungsform kann auch ein Druckminderer als Bauteil eingebaut werden, der Druckmittel aus dem Druckmittelvorrat lediglich bis zu einem bestimmten Grenzdruck durchlässt.

Durch die Begrenzung des wirkenden Vorratsdruckes kann in allen Fällen zusätzlich erreicht werden, dass bei einem unbeabsichtigten Umschalten des Bypass-Ventils in die zweite Schaltstellung auch eine dadurch ungewollt angeforderte Fahrzeug-Verzögerung begrenzt wird.

Ein ungewolltes. Abbremsen durch eine fehlerhafte redundante Ansteuerung kann gemäß einer vorteilhaften Weiterbildung auch durch ein zusätzliches elektrisch steuerbares Sicherheitsventil, beispielsweise ein 2/2-Wegeventil, erreicht werden, durch das eine Sicherheitsfunktion ausgebildet werden kann. Dieses ist zwischen dem entsprechenden Druckmittelvorrat, der in der zweiten Schaltstellung den ggf. druckangepassten Vorratsdruck vorgibt, und dem Bypass-Ventil angeordnet und wird gleichzeitig mit dem Bypass-Ventil umgeschaltet. Erst wenn beide Ventile bestromt sind, wird der Vorratsdruck als Betriebsbrems-Steuerdruck an den jeweiligen Achsmodulator oder als Betriebsbrems-Bremsdruck an die jeweilige Betriebsbremse ausgegeben. Dadurch kann selbst bei einem unbeabsichtigten Umschalten des Bypass-Ventils eine ungewollte Bremsung verhindert werden.

Gemäß einer vorteilhaften Weiterbildung kann von der Bypass-Steuereinrichtung über einen Drucksensor oder einen einfachen Druckschalter, an denen der Betriebsbrems-Steuerdruck einer bestimmten Fahrzeugachse, vorzugsweise der Vorderachse, anliegt, festgestellt werden, ob der Fahrer das Fußbremsventil betätigt oder nicht. Bei einer Betätigung gibt der Druckschalter oder der Drucksensor ein entsprechendes Signal an die Bypass-Steuereinrichtung aus. Dadurch kann im Redundanzfall festgestellt werden, ob der Fahrer reagiert und ob die redundante elektrische Ansteuerung über das Bypass-Ventil daraufhin abgeschaltet werden kann. Weiterhin können über den dadurch hergeleiteten Fahrerwunsch durch eine Plausibilisierung latente Fehler erkannt werden.

Ein latenter Fehler kann beispielsweise sein, dass ein Notaustaster defekt ist oder das Bypass-Signal nicht fehlerfrei übertragen werden kann. Um auszuschließen, dass ein derartiger latenter Fehler vorhanden ist, kann in bestimmten Abständen im Normalbetrieb auch eine Ansteuerung des Bypass-Ventils unter Beobachtung des Drucksensors erfolgen. Dadurch kann vermieden werden, dass eine lediglich im Ausnahmefall auftretende elektrisch redundante Ansteuerung des Bypass-Ventils durch einen latenten Fehler verhindert wird.

Vorteilhafterweise wird die Bypass-Steuereinrichtung über eine erste Energiequelle und ergänzend über eine davon unabhängige zweite Energiequelle versorgt und eine Betriebsbrems-Steuereinrichtung (ECU), die eine Bremsung über die Betriebsbremsen über eine elektrische Anforderung an die Achsmodulatoren vorgeben kann, lediglich über die erste Energiequelle, so dass bei einem Ausfall der elektrischen Ansteuerung über die Betriebsbrems-Steuereinrichtung (ECU) aufgrund eines Defekts in der ersten Energiequelle dennoch eine redundante elektrisch gesteuerte Bremsung über die pneumatischen Pfade durch die Bypass-Steuereinrichtung bewirkt werden kann. Eine Energieversorgung im Redundanzfall kann aber auch durch einen Generator, beispielsweise eine Lichtmaschine, und/oder einen Kurzzeitspeicher und/oder einen Hochvoltspeicher gewährleistet werden, die jeweils unabhängig von der ersten Energieversorgung funktionieren.

Die erfindungsgemäße Anordnung mit dem Bypass-Ventil kann vorteilhafterweise in jedem pneumatischen Pfad des Fahrzeuges bzw. in jedem Bremskreis vorgesehen sein, über den Betriebsbremsen im Redundanzfall pneumatisch angesteuert werden können. Vorzugsweise ist die Anordnung jedoch in einem ersten Bremskreis an einer Vorderachse des Fahrzeuges vorgesehen, um das Fahrzeug im Redundanzfall ergänzend zu einer an einer Hinterachse angeordneten Parkbremse auch über die entsprechenden pneumatischen Pfade der Vorderachse über die Betriebsbremsen elektronisch gesteuert redundant abbremsen zu können. Zudem kann die erfindungsgemäße Anordnung auch in einem elektronisch steuerbaren pneumatischen Bremssystem eines Anhängers als Fahrzeug vorgesehen sein, um die Räder des Anhängers entsprechend über die Betriebsbremsen abbremsen zu können.

Die Erfindung wird im Folgenden anhand der beiliegenden Zeichnung erläutert. Es zeigen:
- Fig. 1a, b, c: ein erfindungsgemäßes Bremssystem mit einem Bypass-Ventil in unterschiedlichen Ausführungsformen als Blockschaltbild;
- Fig. 1d: ein zeitlicher Verlauf eines gepulsten Betriebsbrems-Steuerdruckes in einem Bremssystem gemäß Fig. 1b;
- Fig. 1e, f, g: Varianten zur Energieversorgung des elektropneumatisch gesteuerten Bremssystems;
- Fig. 2: eine weitere Ausführungsform des Bremssystems mit einer Sicherheitsfunktion;
- Fig. 3: eine weitere Ausführungsform des Bremssystems mit Anschluss des Bypass-Ventils an einen dritten Druckmittelvorrat;
- Fig. 4: ein weiteres Bremssystem mit einer rein pneumatischen Ansteuerung von Betriebsbremsen; und
- Fig. 5: ein Flussdiagramm zur Durchführung des Verfahrens.

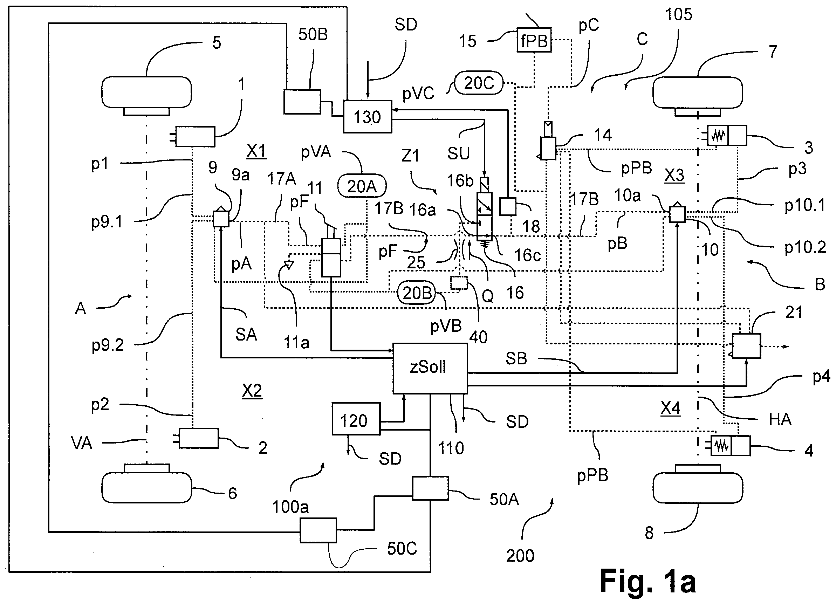

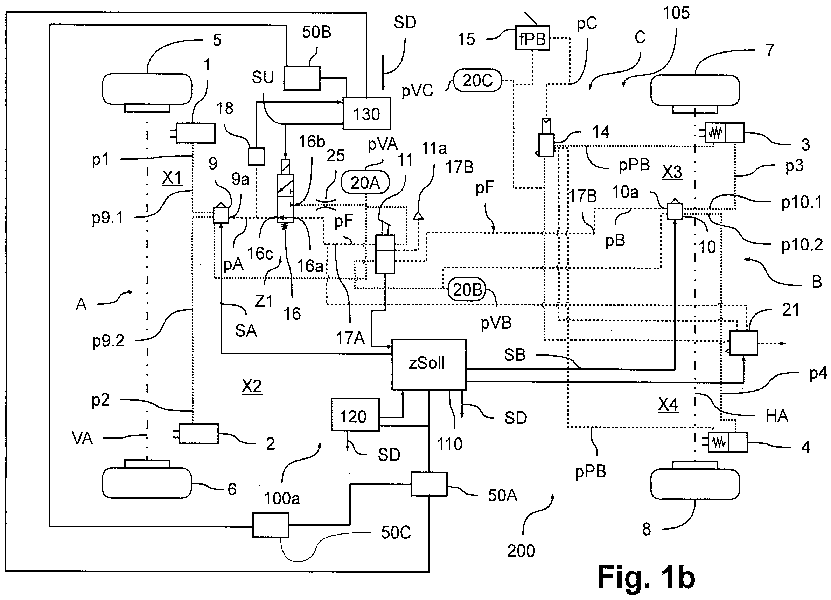

In den Ausführungsformen gemäß Fig. 1a und Fig. 1b ist ein Ausschnitt aus einem elektropneumatischen Bremssystem 100a eines Fahrzeuges 200, insbesondere Nutzfahrzeuges, als Blockschaltbild dargestellt, wobei das elektropneumatische Bremssystem als EBS-Bremssystem 100a ausgeführt ist, d.h. eine Bremsvorgabe erfolgt im Normalbetrieb elektrisch. Das EBS-Bremssystem 100a weist dazu vier Radbremsen 1, 2, 3, 4 auf, die dazu dienen, die Räder 5, 6, 7, 8 des Fahrzeuges 200 abzubremsen. Zum Abbremsen sind drei Bremskreise A, B, C vorgesehen, denen jeweils ein Druckmittelvorrat 20A, 20B, 20C zugeordnet ist, um die jeweiligen Bremskreise A, B, C mit einem Druckmittel zu versorgen und somit den Aufbau eines Bremsdruckes p1, p2, p3, p4, pPB für die jeweiligen Radbremsen 1, 2, 3, 4 zu ermöglichen. In jedem Druckmittelvorrat 20A, 20B, 20C herrscht ein entsprechender Vorratsdruck pVA, pVB, pVC, wobei im ersten und im zweiten Druckmittelvorrat 20A, 20B ein Vorratsdruck pVA, pVB von beispielsweise 12bar und im dritten Druckmittelvorrat 20C ein dritter Vorratsdruck pVC von beispielsweise 8bar vorherrscht.

In einem ersten Bremskreis A sind die Radbremsen 1, 2 an den Rädern 5, 6 einer Vorderachse VA angeordnet, wobei die Radbremsen 1, 2 als Betriebsbremsen ausgeführt sind. Die Radbremsen 3, 4 an einer Hinterachse HA sind als kombinierte Federspeicher- und Betriebsbremsen ausgeführt, so dass die Räder 7, 8 der Hinterachse HA unabhängig voneinander zum einen über einen zweiten Bremskreis B über eine Betriebsbremsfunktion und zusätzlich auch über einen dritten Bremskreis C über eine Parkbremsfunktion abgebremst werden können.

In den ersten beiden Bremskreisen A, B werden die Betriebsbrems-Bremsdrücke p1, p2, p3, p4 im Normalbetrieb über elektrisch gesteuerte Achsmodulatoren 9, 10 erzeugt, indem von einer Betriebsbrems-Steuereinrichtung 110 (ECU) Steuersignale SA, SB an die Achsmodulatoren 9, 10 elektrisch übermittelt werden, die dann versorgt vom entsprechenden Druckmittelvorrat 20A, 20B einen bestimmten Betriebsbrems-Bremsdruck p1, p2, p3, p4 aussteuern. Die Höhe der Betriebsbrems-Bremsdrücke p1, p2, p3, p4 ergibt sich insbesondere aus einer angeforderten Fahrzeug-Soll-Verzögerung zSoll, die gemäß diesem Ausführungsbeispiel aus einer vom Fahrer über ein Fußbremsventil 11 manuell vorgegebenen Anforderung oder von einer Assistenz-Steuereinrichtung 120 (ADAS-ECU, (A)dvanced-(D)river-(AS)sistance), die zur automatisierten Steuerung des Fahrzeuges 200 vorgesehen ist, folgt.

Auf einen ABS-Bremsschlupffall an den Rädern 5, 6 7, 8 beiden Fahrzeugachsen VA, HA kann durch entsprechende elektrische Ansteuerung des jeweiligen Achsmodulators 9, 10 reagiert werden.

Bei einem Ausfall oder einem Defekt in der elektronischen Ansteuerung der beiden Achsmodulatoren 9, 10 kann auf eine pneumatische Rückfallebene gewechselt werden, indem ein bei einer Betätigung des Fußbremsventils 11 durch den Fahrer pneumatisch ausgegebener Betätigungsdruck pF als ein pneumatischer Betriebsbrems-Steuerdruck pA, pB an den jeweiligen Achsmodulator 9, 10 des jeweiligen Bremskreises A, B ausgesteuert wird. Ein erster Betriebsbrems-Steuerdruck pA wird hierbei an einen ersten pneumatischen Steuereingang 9a am ersten Achsmodulator 9 und ein zweiter Betriebsbrems-Steuerdruck pB an einen zweiten pneumatischen Steuereingang 10a am zweiten Achsmodulator 10 geleitet, wobei die pneumatischen Steuereingänge 9a, 10a im Redundanzfall zur Ansteuerung des jeweiligen Achsmodulators 9, 10 freigegeben werden.

Der jeweilige Achsmodulator 9, 10 verstärkt den Betriebsbrems-Steuerdruck pA, pB entsprechend und gibt einen luftmengenverstärkten Achsmodulator-Druck p9.1, p9.2, p10.1, p10.2 aus, der als Betriebsbrems-Bremsdruck p1, p2, p3, p4 an die entsprechenden Radbremsen 1, 2, 3, 4 ausgegeben wird. Somit kann von einer elektronischen Ansteuerung der Achsmodulatoren 9, 10 im pneumatischen Redundanzfall auf eine pneumatische Ansteuerung durch das Fußbremsventil 11 gewechselt werden, wobei die Betätigung der jeweiligen Radbremsen 1, 2, 3, 4 im Redundanzfall über pneumatische Pfade X1, X2, X3, X4 stattfindet. Unter einem pneumatischen Pfad X1, X2, X3, X4 wird die gesamte pneumatische Verbindung zwischen dem Fußbremsventil 11 und der jeweiligen Radbremse 1, 2, 3, 4 verstanden, über die die jeweilige Radbremse 1, 2, 3, 4 mit einem bestimmten Betriebsbrems-Bremsdruck p1, p2, p3, p4 versorgt wird, wobei gemäß Fig. 1a und 1b vier pneumatische Pfade X1, X2, X3, X4 vorgesehen sind.

Im dritten Bremskreis C ist ein Parkbrems-Relaisventil 14 vorgesehen. Das Parkbrems-Relaisventil 14 wird pneumatisch über einen von einem Parkbremsventil 15 vorgegebenen Parkbrems-Steuerdruck pC angesteuert, den das Parkbrems-Relaisventil 14 in gewohnter Weise verstärkt und als Parkbrems-Bremsdruck pPB an den Federspeicherteil in den Radbremsen 3, 4 der Hinterachse HA ausgibt. Der Parkbrems-Steuerdruck pC wird gemäß dieser Ausführungsform in Abhängigkeit einer manuellen Betätigung des Parkbremsventils 15 durch den Fahrer erzeugt, der dadurch eine bestimmte Parkbremskraft fPB vorgibt. Es kann aber auch eine (nicht dargestellte) elektronische Parkbremsvorgabe erfolgen.

Über ein Anhänger-Steuerventil 21 kann der erste Betriebsbrems-Steuerdruck pA oder der Parkbrems-Steuerdruck pPB auch an einen nicht dargestellten Anhänger ausgegeben werden, um diesen abzubremsen.

Weiterhin ist im erfindungsgemäßen elektropneumatischen Bremssystem 100a ein Bypass-Ventil 16 vorgesehen, wobei dieses gemäß Fig. 1b in einer ersten, dem ersten Bremskreis A zugeordneten Steuerleitung 17A, die das Fußbremsventil 11 mit dem ersten Achsmodulator 9 an der Vorderachse VA verbindet, und gemäß Fig. 1a in einer zweiten, dem zweiten Bremskreis B zugeordneten Steuerleitung 17B, die das Fußbremsventil 11 mit dem zweiten Achsmodulator 10 an der Hinterachse HA verbindet angeordnet ist. Da die Funktion des monostabilen Bypass-Ventils 16 in Fig. 1a und Fig. 1b identisch ist und dieses lediglich einen anderen Bremskreis A, B steuert, wird im Folgenden auf beide Figuren parallel Bezug genommen. Es kann auch vorgesehen sein, in beiden Bremskreisen A, B jeweils ein Bypass-Ventil 16 anzuordnen, so dass ein Bremssystem entsteht, das einer Kombination der beiden Figuren 1a, 1b entspricht.

Das monostabile Bypass-Ventil 16 ist als elektrisch steuerbares 3/2-Wegeventil, beispielsweise als ein Solenoid-Ventil, ausgeführt, das in zwei Schaltstellungen Z1, Z2 gebracht werden kann und dazu dient, dem jeweiligen pneumatischen Pfad X1, X2, X3, X4 einen Betriebsbrems-Steuerdruck pA, pB vorzugeben, wobei die beiden pneumatischen Pfade X1, X2 der Vorderachse VA und die beiden pneumatischen Pfade X3, X4 der Hinterachse HA zwischen dem Fußbremsventil 11 und dem jeweiligen Achsmodulator 9, 10 jeweils zusammenfallen, da sie beide in derselben Steuerleitung 17A, 17B verlaufen.

Ein erster Wege-Eingang 16a des monostabilen Bypass-Ventils 16 ist mit dem Fußbremsventil 11 und ein zweiter Wege-Eingang 16b mit dem dem jeweiligen Bremskreis A, B zugeordneten Druckmittelvorrat 20A, 20B verbunden. Ein Wege-Ausgang 16c ist mit dem ersten pneumatischen Steuereingang 9a am ersten Achsmodulator 9 (Fig. 1b) bzw. dem zweiten pneumatischen Steuereingang 10a am zweiten Achsmodulator 10 (Fig. 1a) verbunden, so dass der Betriebsbrems-Steuerdruck pA, pB für den jeweiligen Bremskreis A, B je nach Schaltstellung Z1, Z2 entweder in Abhängigkeit des Betätigungsdruckes pF oder in Abhängigkeit des ersten bzw. zweiten Vorratsdruckes pVA, pVB vorgegeben wird.

In der ersten Schaltstellung Z1 des monostabilen Bypass-Ventils 16 wird der in Abhängigkeit von der Fahrerbetätigung erzeugte Betätigungsdruck pF an den Wege-Ausgang 16c durchgeleitet, so dass dieser als Betriebsbrems-Steuerdruck pA, pB am jeweiligen pneumatischen Steuereingang 9a, 10a anliegt. In der zweiten Schaltstellung Z2 des monostabilen Bypass-Ventils 16 wird der jeweilige Druckmittelvorrat 20A, 20B mit dem Wege-Ausgang 16c verbunden, so dass als Betriebsbrems-Steuerdruck pA, pB der im jeweiligen Druckmittelvorrat 20A, 20B vorherrschende Vorratsdruck pVA, pVB ausgegeben wird.

Somit wird in der ersten Schaltstellung Z1 durch den jeweiligen Achsmodulator 9, 10 ein dem Fahrerwunsch entsprechender Betriebsbrems-Bremsdruck p1, p2, p3, p4 an die jeweiligen Radbremsen 1, 2, 3, 4 ausgesteuert. Bei unbetätigtem Fußbremsventil 11 führt das Umschalten des monostabilen Bypass-Ventils 16 in die erste Schaltstellung Z1 daher automatisch zu einer Entlüftung der jeweiligen Steuerleitung 17A, 17B, da über einen Entlüftungsanschluss 11a am Fußbremsventil 11 der Betätigungsdruck pF in etwa auf Atmosphärendruck pAtm reduziert wird. Dementsprechend wird auch ein niedriger Betriebsbrems-Steuerdruck pA, pB und ein niedriger Betriebsbrems-Bremsdruck p1, p2, p3, p4 an die jeweiligen Radbremsen 1, 2, 3, 4 ausgesteuert, das Fahrzeug 200 wird dann zumindest über die pneumatischen Pfade X1, X2, X3, X4 im Redundanzfall in den ersten beiden Bremskreisen A, B nicht abgebremst.

In der zweiten Schaltstellung Z2 hingegen wird ein dem jeweiligen Vorratsdruck pVA, pVB entsprechender Betriebsbrems-Bremsdruck p1, p2, p3, p4 erzeugt. Da normalerweise ein hoher Vorratsdruck pVA, pVB vorliegt - beispielsweise 12bar - führt die zweite Schaltstellung Z2 daher zu einer maximalen Betätigung der jeweiligen Radbremsen 1, 2, 3, 4. Somit wird in einfacher Weise erreicht, dass das Fahrzeug 200 bei eingestellter zweiter Schaltstellung Z2 mit maximaler Bremswirkung elektronisch gesteuert in den Stillstand überführt werden kann. Die Beaufschlagung der Radbremsen 1, 2, 3, 4 erfolgt dann kontinuierlich mit gleichbleibendem Betriebsbrems-Bremsdruck p1, p2. p3, p4.

Im Betrieb ist immer automatisch eine Anpassung des Betriebsbrems-Bremsdruckes p1, p2, p3, p4 an den vorherrschenden Betriebsbrems-Steuerdruck pA, pB vorgesehen, der durch die Schaltstellung Z1, Z2 des monostabilen Bypass-Ventils 16 bestimmt wird. Ein Halten des Betriebsbrems-Bremsdruckes p1, p2, p3, p4 nach einem Umschalten des monostabilen Bypass-Ventils 16 oder nach einer Reduzierung der Bremsanforderung ist daher zumindest durch das monostabile Bypass-Ventil 16 nicht möglich. Das monostabile Bypass-Ventil 16 sorgt lediglich dafür, dass im Notfall bei einem Ausfall der Elektronik elektronisch redundant ein garantiertes Abbremsen in einen sicheren Zustand erfolgen kann.

Gesteuert wird das Einstellen der entsprechenden Schaltstellung Z1, Z2 des monostabilen Bypass-Ventils 16 durch eine Bypass-Steuereinrichtung 130 (Bypass-ECU), die beispielsweise bei einem Ausfall der Assistenz-Steuereinrichtung 120 und/oder der Betriebsbrems-Steuereinrichtung 110 und/oder des entsprechenden Achsmodulators 9, 10 elektrisch redundant in die Bremsung eingreifen kann, indem sie ein Bypass-Signal SU ausgibt, über das das monostabile Bypass-Ventil 16 bestromt wird. Ein Ausfall der Betriebsrems-Steuereinrichtung 110 und/oder der Assistenz-Steuereinrichtung 120 und/oder der elektronischen Ansteuerung der Achsmodulatoren 9, 10 kann hierbei beispielsweise über ein Diagnose Signal SD festgestellt werden.

Um im Redundanzfall eine Versorgung der Bypass-Steuereinrichtung 130 mit Energie sicherzustellen, ist eine erste Energiequelle 50A vorgesehen, die sowohl die Betriebsbrems-Steuereinrichtung 110, die Assistenz-Steuereinrichtung 120 und ggf. auch die Bypass-Steuereinrichtung 130 mit Energie versorgt sowie eine zweite, die Bypass-Steuereinrichtung 130 ebenfalls oder ausschließlich versorgende Energiequelle 50B, die von der ersten Energiequelle 50A unabhängig ist. Die erste Energiequelle 50A und die zweite Energiequelle 50B sind beide an einen Generator 50C, beispielsweise eine Lichtmaschine des Nutzfahrzeugs 200; angeschlossen. Bei einem Ausfall der ersten Energiequelle 50A, bei der das elektropneumatische Bremssystem 100a nicht mehr über die Betriebsbrems-Steuereinrichtung 110 und die Achsmodulatoren 9, 10 elektrisch gesteuert werden kann, ist somit eine elektrisch redundante Ansteuerung über die Bypass-Steuereinrichtung 130 sichergestellt.

Alternativ kann auch lediglich die erste an den Generator 50C angeschlossene Energiequelle 50A verwendet werden, die über eine Sicherung mit der Betriebsbrems-Steuereinrichtung 110 und der Assistenz-Steuereinrichtung 120 und über eine weitere Sicherung mit der Bypass-Steuereinrichtung 130 verbunden ist.

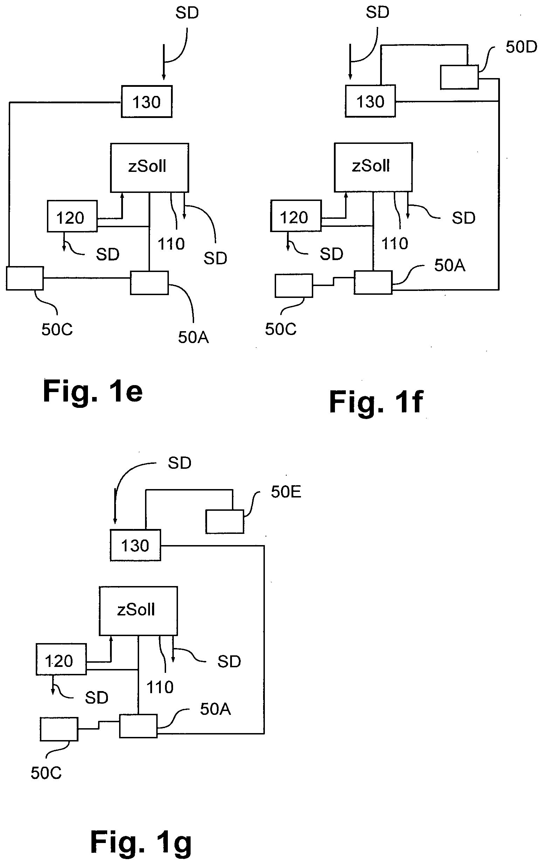

Gemäß Fig. 1e, f, g sind alternative Konzepte für eine redundante Energieversorgung gezeigt. Gemäß einer in Fig. 1e dargestellten Ausführungsform ist vorgesehen, die Bypass-Steuereinrichtung 130 in entsprechender Weise direkt an den Generator 50C anzuschließen und darüber eine Energieversorgung sicherzustellen und die Betriebsbrems-Steuereinrichtung 110 und die Assistenz-Steuereinrichtung 120 an die erste Energiequelle 50A. Der Generator 50C und die erste Energiequelle 50A sind dabei derartig voneinander getrennt, dass ein Kurzschluss im Generator 50C nicht zwangsläufig für einen Kurzschluss in der ersten Energiequelle 50A und umgedreht sorgt, so dass beide im Redundanzfall unabhängig voneinander Energie liefern können.

Gemäß einer in Fig. 1f dargestellten Ausführungsform ist vorgesehen, einen Kurzzeitspeicher 50D, beispielsweise einen Kondensator, insbesondere ein Power-Cap, als Energiequelle zu verwenden, der von der ersten Energiequelle 50A im Normalbetrieb aufgeladen wird. Fällt die erste Energiequelle 50A aus, wird der aufgeladene Kurzzeitspeicher 50D als Energieversorgung für die Bypass-Steuereinrichtung 130 verwendet.

Gemäß einer weiteren Ausführungsform ist gemäß Fig. 1g vorgesehen, einen Hochvoltspeicher 50E als redundante Energieversorgung zu verwenden, der in Hybridfahrzeugen als Energiequelle für einen Antrieb verwendet wird. Dieser ist ebenfalls unabhängig von der ersten Energiequelle 50A und kann somit als redundante Energieversorgung für die Bypass-Steuereinrichtung 130 verwendet werden.

Alternativ kann auch ein zusätzliches redundantes Bordnetz aufgebaut werden.

In der ersten Schaltstellung Z1 ist das monostabile Bypass-Ventil 16 unbestromt, d.h. das monostabile Bypass-Ventil 16 wird von der Bypass-Steuereinrichtung 130 nicht mit dem Bypass-Signal SU angesteuert. Diese erste Schaltstellung Z1 ist somit eine stabile Schaltstellung, in die das monostabile Bypass-Ventil 16 ohne ein vorgegebenes Bypass-Signal SU automatisch zurückfällt, was beispielsweise durch eine Federvorspannung erreicht werden kann. Somit hat der Fahrer auch bei einem Ausfall der Bypass-Steuereinrichtung 130 noch die Möglichkeit, in die Bremsung einzugreifen. Zudem wird ein ungewolltes Bremsen bei einem Stromausfall oder einer fehlerhaften Ansteuerung verhindert. Die zweite Schaltstellung Z2 wird durch Ausgeben eines entsprechenden Bypass-Signals SU bewirkt, das für ein Bestromen des monostabilen Bypass-Ventils 16 sorgt.

Um im Redundanzfall auch eine elektronisch vorgegebene, abgestufte Bremswirkung erreichen zu können, wird das monostabile Bypass-Ventil 16 von der Bypass-Steuereinrichtung 130 gepulst angesteuert, beispielsweise mit einem pulsweitenmodulierten Bypass-Signal SU. D.h. das monostabile Bypass-Ventil 16 wird abwechselnd zwischen der ersten Schaltstellung Z1 und der zweiten Schaltstellung Z2 umgeschaltet. Dadurch ist der jeweils ausgesteuerte Betriebsbrems-Steuerdruck pA, pB nicht konstant sondern schwingt zwischen dem Betätigungsdruck pF (erste Schaltstellung Z1) und dem jeweiligen Vorratsdruck pVA, pVB (zweite Schaltstellung Z2) hin und her. Findet im Redundanzfall keine manuelle Betätigung des Fußbremspedals 11 statt, schwingt der Betriebsbrems-Steuerdruck pA, pB somit zwischen dem vom Belüftungsanschluss 11a vorgegebenen Atmosphärendruck pAtm und dem jeweiligen Vorratsdruck pVA, pVB hin und her. Die durchströmten Leitungen und Ventile sorgen hierbei allerdings für eine Art Tiefpassfilterung, die dafür sorgt, dass der Betriebsbrems-Steuerdruck pA, pB weniger stark ansteigt bzw. abfällt, wenn zwischen den beiden Schaltstellungen Z1, Z2 hin und hergeschaltet wird, so dass der Betätigungsdruck pF bzw. der Vorratsdruck pVA, pVB in der jeweiligen Schaltstellung Z1, Z2 nicht ganz erreicht werden.

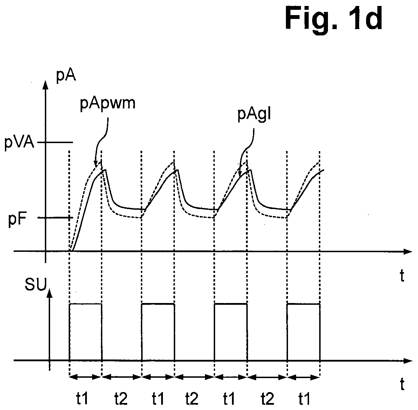

Beispielhaft ist ein derartiger zeitlicher Verlauf des ersten Betriebsbrems-Steuerdruckes pA gemäß dem Aufbau in Fig. 1b in Fig. 1d dargestellt, wobei sich durch die Pulsweitenmodulierung (PWM) des Bypass-Signals SU ein erster Betriebsbrems-Steuerdruck-Verlauf pApwm (gestrichelter Verlauf) ergibt, der insbesondere abhängig ist von einer Puls-Zeit t1, die die Dauer einer gepulsten Ansteuerung über das Bypass-Signal SU angibt, und einer Pausen-Zeit t2, die die Dauer dazwischen im unbestromten Zustand des monostabilen Bypass-Ventils 16 angibt. Die Pulszeit t1 kann zwischen 5ms und 1000ms liegen und die Pausen-Zeit t2 zwischen 0ms und 2000ms. Der erste Betriebsbrems-Steuerdruck-Verlauf pApwm schwingt zwischen dem Betätigungsdruck pF und dem ersten Vorratsdruck pVA hin und her, so dass je nach Zeitpunkt t ein unterschiedlicher erster Betriebsbrems-Steuerdruck pA an den ersten Achsmodulator 9 ausgegeben wird.

Um den schwingenden ersten Betriebsbrems-Steuerdruck-Verlauf pApwm weiter zu glätten und somit eine feinere Abstimmung zu erreichen, ist zwischen dem monostabilen Bypass-Ventil 16 und dem jeweiligen Druckmittelvorrat 20A, 20B eine Drossel 25 vorgesehen, die eine Engstelle für das Druckmittel aus dem jeweiligen Druckmittelvorrat 20A, 20B darstellt. Durch die Drossel 25 kann der Volumenstrom Q aus dem jeweiligen Druckmittelvorrat 20A, 20B zum zweiten Wege-Eingang 16b reduziert werden. Am zweiten Wege-Eingang 16b wird somit beim Umschalten in die zweite Schaltstellung Z2 der entsprechende Vorratsdruck pVA, pVB langsamer aufgebaut, so dass der Verlauf des jeweiligen Betriebsbrems-Steuerdruckes pA, pB geglättet wird und sich ein in Fig. 1d beispielhaft dargestellter geglätteter erster Betriebsbrems-Steuerdruck-Verlauf pAgl (durchgezogener Verlauf) ergibt, wobei dieser nicht mehr so stark hin und her schwingt, zeitlich versetzt ist und somit für ein geringeres Ruckeln beim Bremsen sorgt, da die Flanken beim Anstieg und Abstieg weniger stark ansteigen bzw. abfallen.

Alternativ oder ergänzend zur Drossel 25 kann ein Druckminderer 40 vorgesehen sein, der als aktives Bauteil dafür sorgt, dass der jeweilige Vorratsdruck pVA, pVB druckangepasst zum zweiten Wege-Eingang 16b gelangt. Dabei kann der jeweilige Vorratsdruck pVA, pVB durch den Druckminderer 40 nur bis zu einem Grenzdruck pG von beispielsweise 8bar oder weniger durchgelassen werden, um ein Ansteigen des entsprechenden Betriebsbrems-Steuerdrucks pA, pB auf derartig hohe Drücke zu vermeiden und somit ebenfalls den Druckverlauf zu glätten bzw. die Flanken abzuschwächen. Auch dadurch kann ein starkes Ruckeln beim Bremsen vermieden werden.

Der schwingende und geglättete Druckverlauf pAgl durch das pulsweitenmodulierte Ansteuern über das Bypass-Signal SU wirkt sich positiv auf die Fahrstabilität aus, da dies wie eine Art Stotterbremse wirkt, wenn für die Puls-Zeit t1 und für die Pausen-Zeiten t2 Zeiten verwendet werden, mit denen sichergestellt ist, dass ein Wiederanlaufen eines zum Blockieren neigenden Rades erfolgen kann. Dies ist beispielsweise dann der Fall, wenn der Betriebsbrems-Steuerdruck pA, pB bzw. der Betriebsbrems-Bremsdruck p1, p2, p3, 4 zumindest für eine Grenz-Zeit von beispielsweise 0,25s wiederkehrend unter einen Grenz-Druck von beispielsweise 1bar fällt. In diesem Fall ist sichergestellt, dass ein zum Blockieren neigendes Rad sich wieder drehen kann.

Somit wird durch die Pulsweitenmodulation und das abwechselnde Umschalten kein quasi konstanter mittlerer Betriebsbrems-Steuerdruck pA, pB eingestellt, mit dem die Betriebsbremsen 1, 2, 3, 4 angesteuert werden. Vielmehr wird durch das Alternieren des Betriebsbrems-Steuerdruckes pA, pB im Mittel eine bestimmte Fahrzeug-Soll-Verzögerung zSoll erreicht, bei der die Fahrstabilität erhalten werden kann. Die Puls-Zeit t1 und die Pausen-Zeit t2 können hierbei derartig ausgelegt werden, dass akzeptable Werte für die Verzögerung, die Fahrstabilität und die Lenkbarkeit bei einem redundanten Eingriff gewährleistet werden können. Dies ist insbesondere dann vorteilhaft, wenn eine Bremsschlupfregelung über die Betriebsbrems-Steuereinrichtung 110 und die elektrische Ansteuerung des Achsmodulators 9, 10 über das Steuersignal SA, SB nicht funktioniert, da ein elektrischer Fehler vorliegt.

Über einen zusätzlichen Drucksensor bzw. einen einfachen Druckschalter 18, der gemäß Fig. 1a den zweiten Betriebsbrems-Steuerdruck pB und gemäß Fig. 1b den ersten Betriebsbrems-Steuerdruck pA abgreift, kann zusätzlich erreicht werden, dass die Bypass-Steuereinrichtung 130 bei einem Ausfall der Betriebsbrems-Steuereinrichtung 110 oder der elektrischen Funktion des Fußbremsventils 11 erkennen kann, ob durch eine Betätigung des Fußbremsventils 11 pneumatisch eine Bremsung angefordert wurde, wenn sich das monostabile Bypass-Ventil 16 in der ersten Schaltstellung Z1 befindet. Dadurch kann eine redundante Ansteuerung über das monostabile Bypass-Ventil 16 ggf. abgebrochen werden, wenn erkannt wurde, dass der Fahrer in das Bremsgeschehen eingreift und somit auf einen Ausfall reagiert hat. Weiterhin können durch eine Plausibilisierung latente Fehler im elektropneumatischen Bremssystem 100a erkannt werden.

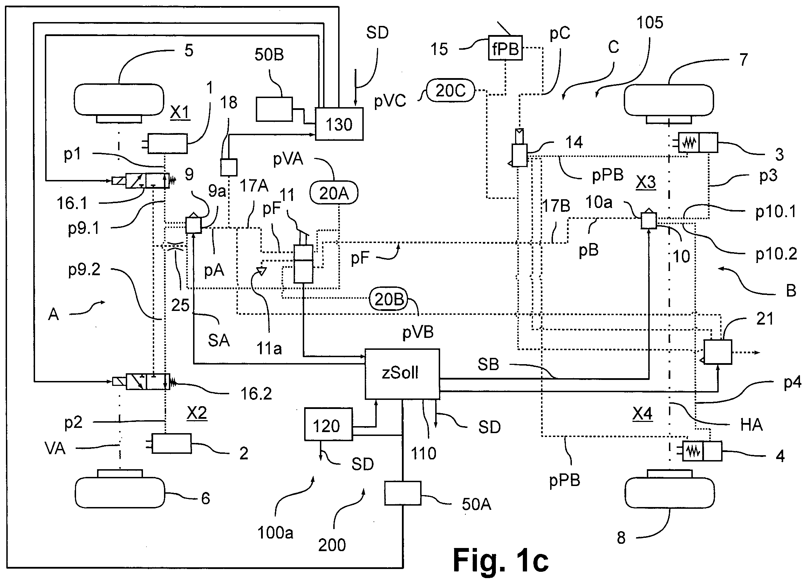

Gemäß der Ausführungsform in Fig. 1c ist das monostabile Bypass-Ventil 16 im jeweiligen pneumatischen Pfad X1, X2, X3, X4 nicht zwischen dem Fußbremsventil 11 und einem der Achsmodulatoren 9, 10 angeordnet sondern zwischen dem ersten Achsmodulator 9 und den Radbremsen 1, 2 der Vorderachse VA. Da sich die pneumatischen Pfade X1, X2 an der Vorderachse VA nach dem ersten Achsmodulator 9 zu den jeweiligen Radbremsen 1, 2 verzweigen, sind gemäß dieser Ausführungsform zwei monostabile Bypass-Ventile 16.1, 16.2 vorgesehen, die jeweils von der Bypass-Steuereinrichtung 130 angesteuert werden, um die entsprechende Schaltstellung Z1, Z2 einzustellen.

Somit wird bei einer Betätigung des Fußbremsventils 11 durch den ersten Achsmodulator 9 immer in Abhängigkeit des ersten Betriebsbrems-Steuerdruckes pA ein luftmengenverstärkter Achsmodulator-Druck 9.1, 9.2 im entsprechenden Pfad X1, X2 der Vorderachse VA ausgesteuert und diese bei eingestellter erster Schaltstellung Z1 der beiden monostabilen Bypass-Ventile 16.1, 16.2 an die dem jeweiligen monostabilen Bypass-Ventil 16.1, 16.2 zugeordnete Radbremsen 1, 2 an der Vorderachse VA als Betriebsbrems-Bremsdrücke p1, p2 weitergeleitet. Somit erfolgt in der ersten Schaltstellung Z1 der beiden monostabilen Bypass-Ventile 16.1, 16.2 auch hier eine Betätigung der Radbremsen 1, 2 an der Vorderachse VA in Abhängigkeit des Fahrerwunsches.

In der zweiten Schaltstellung Z2 wird analog zu den Ausführungsformen in Fig. 1a und Fig. 1b der in diesem Fall erste Vorratsdruck pVA des ersten Druckmittelvorrats pVA des ersten Bremskreises A der Vorderachse VA als Betriebsbrems-Bremsdruck p1, p2 vom jeweiligen monostabilen Bypass-Ventil 16.1, 16.2 durchgeleitet, so dass ein maximaler Druckaufbau und somit eine maximale Bremsung an den Radbremsen 1, 2 der Vorderachse VA erfolgt.

Das jeweilige monostabile Bypass-Ventil 16.1, 16.2 gibt somit gemäß dieser Ausführungsform immer direkt einen Betriebsbrems-Bremsdruck p1, p2 für die Radbremsen 1, 2 der Vorderachse VA vor.

Wie auch in den vorherigen Ausführungsformen in Fig. 1a und 1b kann das jeweilige monostabile Bypass-Ventil 16.1, 16.2 pulsweitenmoduliert angesteuert werden, wobei vorzugsweise eine synchrone Ansteuerung erfolgt, um beide Radbremsen 1, 2 der Vorderachse VA gleichzeitig mit einer Stotterbremsfunktion zu betätigen und keine ungewollten Instabilitäten zu erhalten. Allerdings kann durch eine gezielte asynchrone bzw. unterschiedliche Ansteuerung der beiden monostabilen Bypass-Ventile 16.1, 16.2 eine Lenkbremsung gewährleistet werden, bei der die beiden Radbremsen 1, 2 an der Vorderachse VA unterschiedlich stark abgebremst werden. Fig. 1c kann analog auch für die pneumatischen Pfade X3, X4 der Hinterachse HA vorgesehen sein.

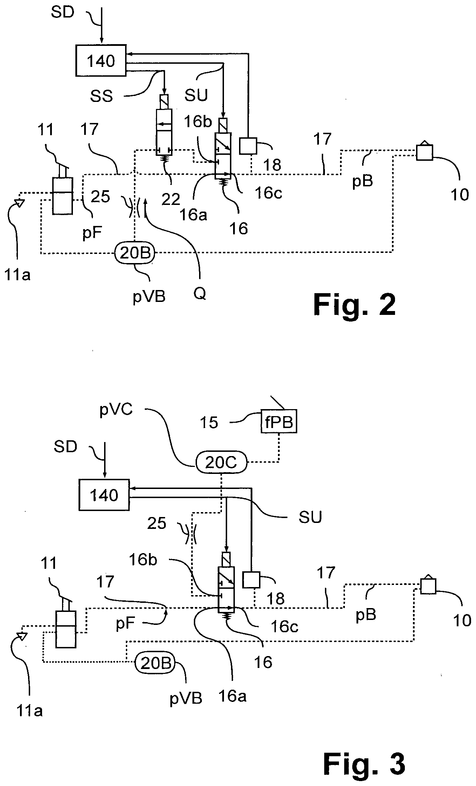

Gemäß Fig. 2 ist eine weitere Ausführung des elektropneumatischen Bremssystems 100a gezeigt. Demnach ist ein zusätzliches Sicherheitsventil 22, ein 2/2-Wegeventil, im zweiten Bremskreis B vorgesehen, das gleichzeitig und in gleicher Weise mit dem monostabilen Bypass-Ventil 16 von der Bypass-Steuereinrichtung 130 über ein Sicherheits-Signal SS umgeschaltet bzw. bestromt werden kann. Dadurch kann verhindert werden, dass bei einem fehlerhaften und somit unbeabsichtigten Umschalten des monostabilen Bypass-Ventils 16 ein ungewolltes Abbremsen über die hinteren Radbremsen 3, 4 stattfindet. Somit kann eine Sicherheitsfunktion ausgebildet werden, da nur dann, wenn tatsächlich beide Ventile 16, 22 gleichzeitig über das Bypass-Signal SU bzw. das Sicherheits-Signal SS bestromt werden, eine Vorgabe des zweiten Vorratsdruckes pVB als zweiter Betriebsbrems-Steuerdruck pB stattfindet, um über die hinteren Radbremsen 3, 4 abzubremsen. Entsprechend kann dies in der Ausführungsform gemäß Fig. 1b für das monostabile Bypass-Ventil 16 im ersten Bremskreis A oder in der Ausführungsform gemäß Fig. 1c für die monostabilen Bypass-Ventile 16.1, 16.2 umgesetzt sein.

Auch kann das Sicherheitsventil 22 gepulst angesteuert werden, wobei in dem Fall ein ebenfalls pulsweitenmoduliertes Sicherheits-Signal SS, vorgegeben wird, das synchron zum Bypass-Signal SU moduliert wird.

Gemäß Fig. 3 ist in einer weiteren Ausführungsform der zweite Wege-Eingang 16b des monostabilen Bypass-Ventils 16 mit dem dritten Druckmittelvorrat 20C für den dritten Bremskreis C, in dem die Parkbremse 105 betrieben wird, verbunden. In diesem dritten Druckmittelvorrat 20C herrscht ein dritter Vorratsdruck pVC von beispielsweise lediglich 8bar, der gegenüber dem zweiten Vorratsdruck pVB von 12bar im ersten und zweiten Druckmittelvorrat 20A, 20B deutlich niedriger ist. Dadurch kann eine Glättung des pulsierenden Betriebsbrems-Steuerdrucks pA, pB erreicht werden, da der Betriebsbrems-Steuerdruck pA, pB von vornherein nicht so stark ansteigen kann. Zudem wird der bei einer ungewollten Bestromung des Bypass-Ventils 16 eingestellte Betriebsbrems-Bremsdruck p1, p2, p3, p4 an der jeweiligen Radbremse 1, 2, 3, 4 begrenzt.

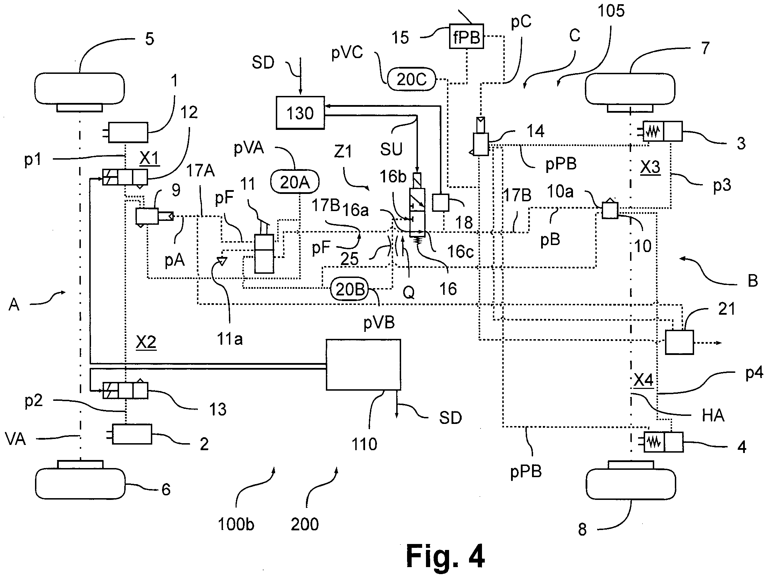

Gemäß Fig. 4 ist ein rein pneumatisches Bremssystem 100b ohne elektronische Ansteuerung der Achsmodulatoren 9, 10 dargestellt. D.h. im ersten und im zweiten Bremskreis A, B wird ausschließlich durch eine pneumatische Vorgabe im pneumatischen Redundanzkreis, d.h. über den jeweiligen pneumatischen Pfad X1, X2, X3, X4 gebremst. Lediglich ABS-Steuerventile 12, 13 an der Vorderachse VA, über die gesteuert von der Betriebsbrems-Steuereinrichtung 110 auf einen Bremsschlupffall an einem der Räder 5, 6 der Vorderachse VA reagiert werden kann, werden elektronisch angesteuert. Über das zusätzliche monostabile Bypass-Ventil 16 im - in diesem Fall - zweiten Bremskreis B kann der pneumatische Redundanzkreis bzw. die pneumatischen Pfade X3, X4 der Hinterachse HA auch elektrisch betätigt werden. Die Ausführungen gemäß den vorherigen Figuren sind in analoger Weise auch auf dieses rein pneumatische Bremssystem 100b anwendbar.

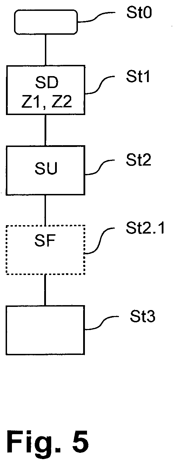

Die Ansteuerung der Bremssysteme 100a, 100b kann gemäß Fig. 5 beispielsweise folgendermaßen durchgeführt werden:
In einem anfänglichen Schritt St0 startet das Verfahren, beispielsweise mit dem Starten des Fahrzeuges 200.

In einem ersten Schritt St1 wird über das Diagnose-Signal SD von der Bypass-Steuereinrichtung 130 festgestellt, ob ein Ausfall oder ein Defekt in der elektrischen Ansteuerung der Achsmodulatoren 9, 10 vorliegt.

Ist dies der Fall, wird in einem zweiten Schritt St2 von der Bypass-Steuereinrichtung 130 ein Bypass-Signal SU an das jeweilige monostabile Bypass-Ventil 16; 16.1, 16.2 ausgegeben, um das Fahrzeug 200 in einen sicheren Zustand abzubremsen. Das elektrisch gesteuerte Abbremsen kann beispielsweise dann erfolgen, wenn festgestellt wurde, dass der Fahrer manuell nicht in die Bremsung eingreift. Dies kann beispielsweise über den Druckschalter 18 festgestellt werden.

Um im Redundanzfall eine Stotterbremsfunktion SF zu realisieren und somit die Fahrstabilität und die Lenkbarkeit zu verbessern, kann das Bypass-Signal SU in einem Unterschritt St2.1 auch pulsweitenmoduliert vorgegeben werden, d.h. es wird zwischen der ersten und der zweiten Schaltstellung Z1, Z2 hin und her geschaltet.

Aufgrund der Bestromung des jeweiligen monostabilen Bypass-Ventils 16; 16.1, 16.2 wird durch das jeweilige monostabile Bypass-Ventil 16; 16.1, 16.2 in einem dritten Schritt St3 - je nach Position im pneumatischen Pfad X1, X2, X3, X4 - ein Betriebsbrems-Steuerdruck pA, pB oder ein Betriebsbrems-Bremsdruck p1, p2, p3, p4 vorgegeben, der bei einer kontinuierlichen Bestromung des monostabilen Bypass-Ventils 16; 16.1, 16.2 dem ggf. druckangepassten Vorratsdruck pVA, pVB, pVC entspricht, so dass ein Betriebsbrems-Bremsdruck p1, p2, p3, p4 ausgesteuert wird, der eine starke Bremsung bewirkt.

Bei einer pulsweitenmodulierten Ansteuerung des monostabilen Bypass-Ventils 16; 16.1, 16.2 in Schritt St2.1 erfolgt durch das jeweilige monostabile Bypass-Ventil 16; 16.1, 16.2 eine Ausgabe eines Betriebsbrems-Steuerdruckes pA, pB bzw. eines Betriebsbrems-Bremsdruckes p1, p2, p3, p4, der zwischen dem Betätigungsdruck pF bzw. dem luftmengenverstärkten Achsmodulator-Druck p9.1, p9.2, p10.1, p10.2 und dem ggf. druckangepassten Vorratsdruck pVA, pVB, pVC des jeweiligen Druckmittelvorrates 20A, 20B, 20C hin und her schwingt, so dass eine Stotterbremsfunktion ausgebildet wird.

### Bezugszeichenliste (Bestandteil der Beschreibung)

- 1, 2, 3, 4: Radbremse
- 5, 6, 7, 8: Räder
- 9: erster Achsmodulator
- 9a: erster pneumatischer Steuereingang
- 10: zweiter Achsmodulator
- 10a: zweiter pneumatischer Steuereingang
- 11: Fußbremsventil
- 11a: Entlüftungsanschluss
- 12, 13: ABS-Steuerventile
- 14: Parkbrems-Relaisventil
- 15: Parkbremsventil
- 16: monostabiles Bypass-Ventil
- 16a: erster Wege-Eingang
- 16b: zweiter Wege-Eingang
- 16c: Wege-Ausgang
- 17A, 17B: Steuerleitung für den jeweiligen Bremskreis A, B
- 18: Drucksensor/Druckschalter
- 20A: erster Druckmittelvorrat für Bremskreis A,
- 20B: zweiter Druckmittelvorrat für Bremskreis B,
- 20C: dritter Druckmittelvorrat für Bremskreis C,
- 21: Anhänger-Steuerventil
- 22: Sicherheitsventil
- 25: Drossel
- 40: Druckminderer
- 50A: erste Energiequelle
- 50B: zweite Energiequelle
- 50C: Generator
- 50D: Kurzzeitspeicher
- 50E: Hochvoltspeicher
- 100a: elektropneumatisches Bremssystem
- 100b: rein pneumatisches Bremssystem
- 110: Betriebsbrems-Steuereinrichtung (ECU)
- 120: Assistenz-Steuereinrichtung (ADAS-ECU)
- 130: Bypass-Steuereinrichtung (Bypass-ECU)
- 200: Fahrzeug
- A, B, C: Bremskreise
- fPB: Parkbremskraft
- p1, p2, p3, p4: Betriebsbrems-Bremsdruck
- pA, pB: Betriebsbrems-Steuerdruck der jeweiligen Bremskreise A, B
- pApwm: erster Betriebsbrems-Steuerdruck-Verlauf
- pAgl: geglätteter erster Betriebsbrems-Steuerdruck-Verlauf
- pAtm: Atmosphärendruck
- pC: Parkbrems-Steuerdruck
- pF: Betätigungsdruck
- pPB: Parkbrems-Bremsdruck
- pVA, pVB, pVC: Vorratsdruck im jeweiligen Druckmittelvorrat 20A, 20B, 20C
- Q: Volumenstrom
- SA, SB: Steuersignal
- SF: Stotterbremsfunktion
- SU: Bypass-Signal
- SS: Sicherheits-Signal
- t: Zeitpunkt
- t1: Puls-Zeit
- t2: Pausen-Zeit
- VA, HA: Fahrzeugachsen
- X1, X2: pneumatische Pfade der Vorderachse VA
- X3, X4: pneumatische Pfade der Hinterachse HA
- Z1: erste Schaltstellung
- Z2: zweite Schaltstellung
- zSoll: Fahrzeug-Soll-Verzögerung
- St1, St2, St2.1, St3: Schritte des Verfahrens

## Patentansprüche

1. Elektronisch steuerbares pneumatisches Bremssystem (100a, 100b) in einem Fahrzeug (200), insbesondere Nutzfahrzeug (200), mindestens aufweisend:
Radbremsen (1, 2, 3, 4) zum Abbremsen von Rädern (5, 6, 7, 8) des Fahrzeuges (200), wobei den Radbremsen (1, 2, 3, 4) jeweils über einen von einem Fußbremsventil (11) ausgehenden pneumatischen Pfad (X1, X2, X3, X4) ein Betriebsbrems-Bremsdruck (p1, p2, p3, p4) vorgebbar ist, und mindestens ein elektronisch steuerbares monostabiles Bypass-Ventil (16; 16.1, 16.2), wobei das mindestens eine monostabile Bypass-Ventil (16; 16.1, 16.2) in mindestens einem pneumatischen Pfad (X1, X2, X3, X4) angeordnet ist und das mindestens eine monostabile Bypass-Ventil (16) zwei Schaltstellungen (Z1, Z2) aufweist,
wobei in einer ersten Schaltstellung (Z1) des monostabilen Bypass-Ventils (16; 16.1, 16.2) ein Betriebsbrems-Bremsdruck (p1, p2, p3, p4) im jeweiligen pneumatischen Pfad (X1, X2, X3, X4) in Abhängigkeit eines durch eine manuelle Betätigung des Fußbremsventils (11) erzeugten Betätigungsdruckes (pF) vorgebbar ist,
**dadurch gekennzeichnet, dass**
in einer zweiten Schaltstellung (Z2) des monostabilen Bypass-Ventils (16; 16.1, 16.2) der Betriebsbrems-Bremsdruck (p1, p2, p3, p4) im jeweiligen pneumatischen Pfad (X1, X2, X3, X4) in Abhängigkeit eines in einem Druckmittelvorrat (20A, 20B, 20C) vorherrschenden Vorratsdruckes (pVA, pVB, pVC) vorgebbar ist,
wobei der Betriebsbrems-Bremsdruck (p1, p2, p3, p4) im jeweiligen pneumatischen Pfad (X1, X2, X3, X4) durch ein Umschalten des monostabilen Bypass-Ventils (16; 16.1, 16.2) lediglich in Abhängigkeit des Betätigungsdruckes (pF) und/oder in Abhängigkeit des Vorratsdruckes (pVA, pVB, pVC) erzeugbar ist zum Ausbilden einer elektropneumatischen Redundanz.

2. Elektronisch steuerbares pneumatisches Bremssystem (100a, 100b) nach Anspruch 1, **dadurch gekennzeichnet, dass** in dem pneumatischen Pfad (X1, X2, X3, X4) zwischen dem Fußbremsventil (11) und der jeweiligen Radbremse (1, 2, 3, 4) ein Achsmodulator (9, 10) angeordnet ist, wobei der Achsmodulator (9, 10) in Abhängigkeit eines Betriebsbrems-Steuerdruckes (pA, pB) einen luftmengenverstärkten Achsmodulator-Druck (9.1, 9.2, 10.1, 10.2) ausgibt.

3. Elektronisch steuerbares pneumatisches Bremssystem (100a, 100b) nach Anspruch 2, **dadurch gekennzeichnet, dass** das monostabile Bypass-Ventil (16) in dem pneumatischen Pfad (X1, X2, X3, X4) in einer Steuerleitung (17A, 17B) zwischen dem Fußbremsventil (11) und einem pneumatischen Steuereingang (9a, 10a) des Achsmodulators (9, 10) angeordnet ist und das monostabile Bypass-Ventil (16)
- in der ersten Schaltstellung (Z1) das Fußbremsventil (11) mit dem pneumatischen Steuereingang (9a, 10a) des Achsmodulators (9, 10) verbindet zum Vorgeben des Betätigungsdruckes (pF) als Betriebsbrems-Steuerdruck (pA, pB), und
- in der zweiten Schaltstellung (Z2) den Druckmittelvorrat (20A, 20B, 20C) mit dem pneumatischen Steuereingang (9a, 10a) des Achsmodulators (9, 10) verbindet zum Vorgeben des Betriebsbrems-Steuerdruckes (pA, pB) in Abhängigkeit des Vorratsdruckes (pVA, pVB, pVC).

4. Elektronisch steuerbares pneumatisches Bremssystem (100a, 100b) nach Anspruch 2, **dadurch gekennzeichnet, dass** das monostabile Bypass-Ventil (16.1, 16.2) zwischen dem Achsmodulator (9, 10) und der dem jeweiligen pneumatischen Pfad (X1, X2, X3, X3) zugeordneten Radbremse (1, 2, 3, 4) angeordnet ist und das monostabile Bypass-Ventil (16.1, 16.2)
- in der ersten Schaltstellung (Z1) den Achsmodulator (9, 10) mit der jeweiligen Radbremse (1, 2, 3, 4) verbindet zum Vorgeben des luftmengenverstärkten Achsmodulator-Druckes (9.1, 9.2, 10.1, 10.2) als Betriebsbrems-Bremsdruck (p1, p2, p3, p4) in Abhängigkeit des durch die manuelle Betätigung des Fußbremsventils (11) vorgegebenen Betätigungsdruckes (pF), und
- in der zweiten Schaltstellung (Z2) den Druckmittelvorrat (20A, 20B, 20C) mit der jeweiligen Radbremse (1, 2, 3, 4) verbindet zum Vorgeben des Betriebsbrems-Bremsdruckes (p1, p2, p3, p4) in Abhängigkeit des Vorratsdruckes (pVA, pVB, pVC).

5. Elektronisch steuerbares pneumatisches Bremssystem (100a, 100b) nach Anspruch 4, **dadurch gekennzeichnet, dass** die monostabilen Bypass-Ventile (16.1, 16.2) jedes pneumatischen Pfades (X1, X2, X3, X4) unabhängig voneinander schaltbar sind zum Durchführen einer Lenkbremsung.

6. Elektronisch steuerbares pneumatisches Bremssystem (100a, 100b) nach einem der vorhergehenden Ansprüche, **dadurch gekennzeichnet, dass** das monostabile Bypass-Ventil (16; 16.1, 16.2) bei einem Ausfall oder einem Defekt bei der elektronisch gesteuerten Betätigung der Betriebsbremsen (1, 2, 3, 4), insbesondere bei der Ansteuerung (SA, SB) der Achsmodulatoren (9, 10), über ein von einer Bypass-Steuereinrichtung (130) vorgegebenes Bypass-Signal (SU) elektrisch ansteuerbar ist zum redundanten elektropneumatischen Betätigen der Radbremsen (1, 2, 3, 4),
wobei das monostabile Bypass-Ventil (16; 16.1, 16.2) ohne eine Ansteuerung über das Bypass-Signal (SU) in die erste, unbestromte Schaltstellung (Z1) und bei einer Ansteuerung über das Bypass-Signal (SU) in die zweite, bestromte Schaltstellung (Z2) übergeht,
wobei die erste Schaltstellung (Z1) eine stabile Schaltstellung darstellt.

7. Elektronisch steuerbares pneumatisches Bremssystem (100a, 100b) nach Anspruch 6, **dadurch gekennzeichnet, dass** die Bypass-Steuereinrichtung (130) ausgebildet ist, das Bypass-Signal (SU) pulsweitenmoduliert vorzugeben zum abwechselnden Umschalten zwischen der ersten Schaltstellung (Z1) und der zweiten Schaltstellung (Z2) zum Ausbilden einer abgestuften Bremsung und zum Ausbilden einer Stotterbremsfunktion (SF) durch Variieren des Betriebsbrems-Bremsdruckes (p1, p2, p3, p4).

8. Elektronisch steuerbares pneumatisches Bremssystem (100a, 100b) nach Anspruch 7, **dadurch gekennzeichnet, dass** das monostabile Bypass-Ventil (16; 16.1, 16.2) abwechselnd für eine Puls-Zeit (t1) bestrombar ist und für eine Pausen-Zeit (t2) unbestromt ist zum abwechselnden Umschalten des monostabilen Bypass-Ventils (16; 16.1, 16.2), wobei die Puls-Zeit (t1) zwischen 5ms und 1000ms ist und die Pausen-Zeit (t2) zwischen 0ms und 2000s liegt.

9. Elektronisch steuerbares pneumatisches Bremssystem (100a, 100b) nach einem der vorhergehenden Ansprüche, **dadurch gekennzeichnet, dass** zwischen dem jeweiligen Druckmittelvorrat (20A, 20B, 20C) und dem monostabilen Bypass-Ventil (16; 16.1, 16.2) eine Drossel (25) und/oder ein Druckminderer (40) angeordnet ist zum Begrenzen eines zum monostabilen Bypass-Ventil (16; 16.1, 16.2) gelangenden Volumenstroms (Q) oder des zum monostabilen Bypass-Ventil (16; 16.1, 16.2) gelangenden Vorratsdruckes (pVA, pVB, pVC).

10. Elektronisch steuerbares pneumatisches Bremssystem (100a, 100b) nach einem der vorhergehenden Ansprüche, **dadurch gekennzeichnet, dass** das monostabile Bypass-Ventil als elektronisch steuerbares 3/2-Wegeventil (16; 16.1, 16.2), insbesondere Solenoid-Ventil, ausgeführt ist.

11. Elektronisch steuerbares pneumatisches Bremssystem (100a, 100b) nach einem der vorhergehenden Ansprüche, **dadurch gekennzeichnet, dass** zwischen dem monostabilen Bypass-Ventil (16; 16.1, 16.2) und dem Druckmittelvorrat (20A, 20B, 20C) ein gleichzeitig mit dem monostabilen Bypass-Ventil (16; 16.1, 16.2) bestrombares Sicherheitsventil (22) angeordnet ist zum Ausbilden einer Sicherheitsfunktion, durch die bei ungewollter Einstellung der zweiten Schaltstellung (Z2) des monostabilen Bypass-Ventils (16; 16.1, 16.2) die Vorgabe des Betriebsbrems-Bremsdruckes (p1, p2, p3, p4) in Abhängigkeit des Vorratsdruckes (pVA, pVB, pVC) verhinderbar ist.

12. Verfahren zum elektronischen Steuern eines pneumatischen Bremssystems (100a, 100b) nach einem der vorhergehenden Ansprüche, mit mindestens den folgenden Schritten:
- Feststellen, ob ein Ausfall oder ein Defekt bei der elektronischen Betätigung der Betriebsbremsen (1, 2, 3, 4), insbesondere bei der Ansteuerung (SA, SB) der Achsmodulatoren (9, 10), vorliegt (St1);
- Ansteuern des monostabilen Bypass-Ventils (16; 16.1, 16.2) über das Bypass-Signal (SU), falls ein Ausfall oder ein Defekt festgestellt wurde und keine Betätigung des Fußbremsventils (11) durch den Fahrer stattfindet, zum redundanten elektropneumatischen Betätigen der Radbremsen (1, 2, 3, 4) (St2, St2.1);
- Erzeugen eines Betriebsbrems-Bremsdruckes (p1, p2, p3, p4) in Abhängigkeit des durch das unbetätigte Fußbremsventil (11) vorgegebenen Betätigungsdruckes (pF) und/oder in Abhängigkeit des Vorratsdruckes (pVA, pVB, pVC) (St3).

13. Verfahren nach Anspruch 12, **dadurch gekennzeichnet, dass** das monostabile Bypass-Ventil (16; 16.1, 16.2) bei einem Ausfall oder einem Defekt bei der elektronischen Betätigung der Betriebsbremsen (1, 2, 3, 4) über ein von der Bypass-Steuereinrichtung (130) vorgegebenes Bypass-Signal (SU) elektrisch angesteuert wird,
wobei das monostabile Bypass-Ventil (16; 16.1, 16.2) ohne eine Ansteuerung über das Bypass-Signal (SU) in die erste, unbestromte Schaltstellung (Z1) und bei einer Ansteuerung über das Bypass-Signal (SU) in die zweite, bestromte Schaltstellung (Z2) übergeht.

14. Verfahren nach Anspruch 13, **dadurch gekennzeichnet, dass** die Bypass-Steuereinrichtung (130) das Bypass-Signal (SU) pulsweitenmoduliert vorgibt, wobei das monostabile Bypass-Ventil (16; 16.1, 16.2) dadurch zwischen der ersten Schaltstellung (Z1) und der zweiten Schaltstellung (Z2) abwechselnd hin und her geschaltet wird,
wobei das monostabile Bypass-Ventil (16; 16.1, 16.2) dazu für die Puls-Zeit (t1) bestromt wird und für die Pausen-Zeit (t2) unbestromt ist, so dass der Betriebsbrems-Bremsdruck (p1, p2, p3, p4) variiert zum Ausbilden der Stotterbremsfunktion (SF).

15. Fahrzeug (200), insbesondere Nutzfahrzeug (200), mit einem elektronisch gesteuerten pneumatischen Bremssystem (100a, 100b) nach einem der Ansprüche 1 bis 11.

## Claims

1. Electronically controllable pneumatic brake system (100a, 100b) in a vehicle (200), in particular a utility vehicle (200), at least comprising:
wheel brakes (1, 2, 3, 4) for braking wheels (5, 6, 7, 8) of the vehicle (200), wherein a service brake braking pressure (p1, p2, p3, p4) can be specified for each of the wheel brakes (1, 2, 3, 4) via a pneumatic path (X1, X2, X3, X4) starting from a foot brake valve (11),
and at least one electronically controllable monostable bypass valve (16; 16.1, 16.2), wherein the at least one monostable bypass valve (16; 16.1, 16.2) is disposed in at least one pneumatic path (X1, X2, X3, X4) and the at least one monostable bypass valve (16) has two switching positions (Z1, Z2), wherein in a first switching position (Z1) of the monostable bypass valve (16; 16.1, 16.2) a service brake braking pressure (p1, p2, p3, p4) in the respective pneumatic path (X1, X2, X3, X4) can be specified depending on an actuation pressure (pF) produced by manual actuation of the foot brake valve (11),
**characterized in that**
in a second switching position (Z2) of the monostable bypass valve (16; 16.1, 16.2), the service brake braking pressure (p1, p2, p3, p4) in the respective pneumatic path (X1, X2, X3, X4) can be specified depending on a reservoir pressure (pVA, pVB, pVC) prevailing in a pressure medium reservoir (20A, 20B, 20C),
wherein the service brake braking pressure (p1, p2, p3, p4) in the respective pneumatic path (X1, X2, X3, X4) can be produced by a changeover of the monostable bypass valve (16; 16.1, 16.2) depending only on the actuation pressure (pF) and/or depending on the reservoir pressure (pVA, pVB, pVC) to implement an electropneumatic redundancy.

2. Electronically controllable pneumatic brake system (100a, 100b) according to Claim 1, **characterized in that** an axle modulator (9, 10) is disposed in the pneumatic path (X1, X2, X3, X4) between the foot brake valve (11) and the respective wheel brake (1, 2, 3, 4), wherein the axle modulator (9, 10) outputs an air volume-boosted axle modulator pressure (9.1, 9.2, 10.1, 10.2) depending on a service brake control pressure (pA, pB).

3. Electronically controllable pneumatic brake system (100a, 100b) according to Claim 2, **characterized in that** the monostable bypass valve (16) is disposed in the pneumatic path (X1, X2, X3, X4) in a control line (17A, 17B) between the foot brake valve (11) and a pneumatic control input (9a, 10a) of the axle modulator (9, 10) and the monostable bypass valve (16)
- in the first switching position (Z1) connects the foot brake valve (11) to the pneumatic control input (9a, 10a) of the axle modulator (9, 10) to specify the actuation pressure (pF) as the service brake control pressure (pA, pB), and
- in the second switching position (Z2) connects the pressure medium reservoir (20A, 20B, 20C) to the pneumatic control input (9a, 10a) of the axle modulator (9, 10) to specify the service brake control pressure (pA, pB) depending on the reservoir pressure (pVA, pVB, pVC).

4. Electronically controllable pneumatic brake system (100a, 100b) according to Claim 2, **characterized in that** the monostable bypass valve (16.1, 16.2) is disposed between the axle modulator (9, 10) and the wheel brake (1, 2, 3, 4) that is assigned to the respective pneumatic path (X1, X2, X3, X3) and the monostable bypass valve (16.1, 16.2)
- in the first switching position (Z1) connects the axle modulator (9, 10) to the respective wheel brake (1, 2, 3, 4) to specify the air volume-boosted axle modulator pressure (9.1, 9.2, 10.1, 10.2) as the service brake braking pressure (p1, p2, p3, p4) depending on the actuation pressure (pF) demanded by the manual actuation of the foot brake valve (11), and
- in the second switching position (Z2) connects the pressure medium reservoir (20A, 20B, 20C) to the respective wheel brake (1, 2, 3, 4) to specify the service brake braking pressure (p1, p2, p3, p4) depending on the reservoir pressure (pVA, pVB, pVC) .

5. Electronically controllable pneumatic brake system (100a, 100b) according to Claim 4, **characterized in that** the monostable bypass valves (16.1, 16.2) of each pneumatic path (X1, X2, X3, X4) can be switched mutually independently to carry out steering braking.

6. Electronically controllable pneumatic brake system (100a, 100b) according to any one of the preceding claims, **characterized in that** the monostable bypass valve (16; 16.1, 16.2) can be electrically actuated by means of a bypass signal (SU) specified by a bypass control device (130) for redundant electropneumatic actuation of the wheel brakes (1, 2, 3, 4) in the event of a failure or a defect of the electronically controlled actuation of the service brakes (1, 2, 3, 4), in particular during actuation (SA, SB) of the axle modulators (9, 10),
wherein the monostable bypass valve (16; 16.1, 16.2) changes into the first, de-energized switching position (Z1) if there is no actuation by means of the bypass signal (SU) and changes into the second, energized switching position (Z2) in the event of actuation by means of the bypass signal (SU), wherein the first switching position (Z1) is a stable switching position.

7. Electronically controllable pneumatic brake system (100a, 100b) according to Claim 6, **characterized in that** the bypass control device (130) is embodied to specify the bypass signal (SU) in a pulse width modulated manner for alternating changeover between the first switching position (Z1) and the second switching position (Z2) to implement graduated braking and to implement a cadence braking function (SF) by varying the service brake braking pressure (p1, p2, p3, p4).

8. Electronically controllable pneumatic brake system (100a, 100b) according to Claim 7, **characterized in that** the monostable bypass valve (16; 16.1, 16.2) is alternately energized for a pulse time (t1) and de-energized for a pause time (t2) for alternating changeover of the monostable bypass valve (16; 16.1, 16.2), wherein the pulse time (t1) is between 5ms and 1000ms and the pause time (t2) lies between 0ms and 2000s.

9. Electronically controllable pneumatic brake system (100a, 100b) according to any one of the preceding claims, **characterized in that** a choke (25) and/or a pressure reducer (40) is disposed between the respective pressure medium reservoir (20A, 20B, 20C) and the monostable bypass valve (16; 16.1, 16.2) to limit a volumetric flow (Q) passing to the monostable bypass valve (16; 16.1, 16.2) or the reservoir pressure (pVA, pVB, pVC) passing to the monostable bypass valve (16; 16.1, 16.2).

10. Electronically controllable pneumatic brake system (100a, 100b) according to any one of the preceding claims, **characterized in that** the monostable bypass valve is implemented as an electronically controllable 3/2-way valve (16; 16.1, 16.2), in particular a solenoid valve.

11. Electronically controllable pneumatic brake system (100a, 100b) according to any one of the preceding claims, **characterized in that** a safety valve (22) that can be energized at the same time as the monostable bypass valve (16; 16.1, 16.2) is disposed between the monostable bypass valve (16; 16.1, 16.2) and the pressure medium reservoir (20A, 20B, 20C) to implement a safety function, by which the specification of the service brake braking pressure (p1, p2, p3, p4) as a function of the reservoir pressure (pVA, pVB, pVC) can be prevented in the event of unintentional setting of the second switching position (Z2) of the monostable bypass valve (16; 16.1, 16.2).

12. Method for electronic control of a pneumatic brake system (100a, 100b) according to any one of the preceding claims, with at least the following steps:
- determining whether there is a failure or a defect of the electronic actuation of the service brakes (1, 2, 3, 4), in particular during actuation (SA, SB) of the axle modulators (9, 10) (St1) ;
- actuation of the monostable bypass valve (16; 16.1, 16.2) by means of the bypass signal (SU), if a failure or a defect has been detected and there is no actuation of the foot brake valve (11) by the driver, for the redundant electropneumatic actuation of the wheel brakes (1, 2, 3, 4) (St2, St2.1) ;
- producing a service brake braking pressure (p1, p2, p3, p4) depending on the actuation pressure (pF) specified by the non-actuated foot brake valve (11) and/or depending on the reservoir pressure (pVA, pVB, pVC) (St3).

13. Method according to Claim 12, **characterized in that** in the event of a failure or a defect during the electronic actuation of the service brakes (1, 2, 3, 4) the monostable bypass valve (16; 16.1, 16.2) is electrically actuated by means of a bypass signal (SU) specified by the bypass control device (130), wherein the monostable bypass valve (16; 16.1, 16.2) changes to the first, de-energized switching position (Z1) if there is no actuation by means of the bypass signal (SU) and changes to the second, energized switching position (Z2) in the event of actuation by means of the bypass signal (SU).

14. Method according to Claim 13, **characterized in that** the bypass control device (130) specifies the bypass signal (SU) in a pulse width modulated manner, wherein as a result the monostable bypass valve (16; 16.1, 16.2) is alternately switched back and forth between the first switching position (Z1) and the second switching position (Z2),
wherein the monostable bypass valve (16; 16.1, 16.2) is energized for the pulse time (t1) and is de-energized for the pause time (t2) for this, so that the service brake braking pressure (p1, p2, p3, p4) varies to implement the cadence braking function (SF) .

15. Vehicle (200), in particular utility vehicle (200), with an electronically controlled pneumatic brake system (100a, 100b) according to any one of Claims 1 to 11.

## Revendications

1. Système de freinage pneumatique à commande électronique (100a, 100b) placé dans un véhicule (200), en particulier un véhicule utilitaire (200), ledit système de freinage comprenant au moins :
des freins de roue (1, 2, 3, 4) destinés à freiner des roues (5, 6, 7, 8) du véhicule (200), une pression de frein de service (p1, p2, p3, p4) pouvant être spécifiée à chacun des freins de roue (1, 2, 3, 4) par le biais d'un chemin pneumatique (X1, X2, X3, X4) partant d'une soupape de frein à pied,
et au moins une soupape de dérivation monostable à commande électronique (16 ; 16.1, 16.2), l'au moins une soupape de dérivation monostable (16 ; 16.1, 16.2) étant disposée dans au moins un chemin pneumatique (X1, X2, X3, X4) et l'au moins une soupape de dérivation monostable (16) comportant deux positions de commutation (Z1, Z2),
une pression de freinage de service (p1, p2, p3, p4) dans le chemin pneumatique respectif (X1, X2, X3, X4) pouvant être spécifiée, dans une première position de commutation (Z1) de la soupape de dérivation monostable (16 ; 16.1, 16.2), en fonction d'une pression d'actionnement (pF) générée par un actionnement manuel de la soupape de frein à pied (11),
**caractérisé en ce que**
la pression du frein de service (p1, p2, p3, p4) dans le chemin pneumatique respectif (X1, X2, X3, X4) peut être spécifiée, dans une deuxième position de commutation (Z2) de la soupape de dérivation monostable (16 ; 16.1, 16.2), en fonction d'une pression de réservoir (pVA, pVB, pVC) régnant dans un réservoir de fluide sous pression (20A, 20B, 20C),
la pression de frein de service (p1, p2, p3, p4) dans le chemin pneumatique respectif (X1, X2, X3, X4) pouvant être générée par commutation de la soupape de dérivation monostable (16 ; 16.1, 16.2) uniquement en fonction de la pression d'actionnement (pF) et/ou en fonction de la pression de réservoir (pVA, pVB, pVC) pour former une redondance électropneumatique.

2. Système de freinage pneumatique à commande électronique (100a, 100b) selon la revendication 1, **caractérisé en ce qu'**un modulateur d'essieu (9, 10) est disposé dans le chemin pneumatique (X1, X2, X3, X4) entre la soupape de frein à pied (11) et le frein de roue respectif (1, 2, 3, 4), le modulateur d'essieu (9, 10) délivrant une pression de modulateur d'essieu (9.1, 9.2, 10.1, 10.2), suralimenté en air, en fonction d'une pression de commande de frein de service (pA, pB).

3. Système de freinage pneumatique à commande électronique (100a, 100b) selon la revendication 2, **caractérisé en ce que** la soupape de dérivation monostable (16) dans le chemin pneumatique (X1, X2, X3, X4) est disposée dans une conduite de commande (17A, 17B) entre la soupape de frein à pied (11) et une entrée de commande pneumatique (9a, 10a) du modulateur d'essieu (9, 10) et la soupape de dérivation monostable (16)
- relie, dans la première position de commutation (Z1), la soupape de frein à pied (11) à l'entrée de commande pneumatique (9a, 10a) du modulateur d'essieu (9, 10) pour spécifier la pression d'actionnement (pF) comme pression de commande de frein de service (pA, pB), et
- relie, dans la deuxième position de commutation (Z2), le réservoir de fluide sous pression (20A, 20B, 20C) à l'entrée de commande pneumatique (9a, 10a) du modulateur d'essieu (9, 10) pour spécifier la pression de commande de frein de service (pA, pB) en fonction de la pression de réservoir (pVA, pVB, pVC).

4. Système de freinage pneumatique à commande électronique (100a, 100b) selon la revendication 2, **caractérisé en ce que** la soupape de dérivation monostable (16.1, 16.2) est disposée entre le modulateur d'essieu (9, 10) et le frein de roue (1, 2, 3, 4) associé au chemin pneumatique respectif (X1, X2, X3, X3) et la soupape de dérivation monostable (16.1, 16.2)
- relie, dans la première position de commutation (Z1), le modulateur d'essieu (9, 10) au frein de roue respectif (1, 2, 3, 4) pour spécifier la pression du modulateur d'essieu (9.1, 9.2, 10.1, 10.2), suralimenté en air, comme pression de frein de service (p1, p2, p3, p4) en fonction de la pression d'actionnement (pF) spécifiée par l'actionnement manuel de la soupape de frein à pied (11), et
- relie, dans la deuxième position de commutation (Z2), le réservoir en fluide sous pression (20A, 20B, 20C) au frein de roue respectif (1, 2, 3, 4) pour spécifier la pression de frein de service (p1, p2, p3, p4) en fonction de la pression de réservoir (pVA, pVB, pVC) .

5. Système de freinage pneumatique à commande électronique (100a, 100b) selon la revendication 4, **caractérisé en ce que** les soupapes de dérivation monostables (16.1, 16.2) de chaque chemin pneumatique (X1, X2, X3, X4) peuvent être commutées indépendamment les unes des autres pour effectuer le freinage de direction.

6. Système de freinage pneumatique à commande électronique (100a, 100b) selon l'une des revendications précédentes, **caractérisé en ce que**, en cas de panne ou de défaut lors de l'actionnement à commande électronique des freins de service (1, 2 , 3, 4), en particulier lors de la commande (SA, SB) des modulateurs d'essieu (9, 10), la soupape de dérivation monostable (16 ; 16.1, 16.2) peut être commandée électriquement par le biais d'un signal de dérivation (SU) spécifié par un dispositif de commande de dérivation (130) pour actionner de manière électropneumatique et redondante les freins de roue ( 1, 2, 3, 4),
la soupape de dérivation monostable (16 ; 16.1, 16.2) passant, lorsqu'elle n'est pas commandée par le signal de dérivation (SU), dans la première position de commutation hors tension (Z1) et, lorsqu'elle est commandée par le signal de dérivation (SU), dans la deuxième position de commutation sous tension (Z2),
la première position de commutation (Z1) représentant une position de commutation stable.

7. Système de freinage pneumatique à commande électronique (100a, 100b) selon la revendication 6, **caractérisé en ce que** le dispositif de commande de dérivation (130) est conçu pour spécifier le signal de dérivation (SU) en modulation de largeur d'impulsion de manière à commuter alternativement entre la première position de commutation (Z1) et la deuxième position de commutation (Z2) de façon à effectuer un freinage étagé et à former une fonction de freinage saccadé (SF) par variation de la pression de frein de service (p1, p2, p3, p4).

8. Système de freinage pneumatique à commande électronique (100a, 100b) selon la revendication 7, **caractérisé en ce que** la soupape de dérivation monostable (16 ; 16.1, 16.2) peut alternativement être sous tension pendant un temps d'impulsion (t1) et hors tension pendant un temps de pause (t2) de manière à commuter alternativement la soupape de dérivation monostable (16 ; 16.1, 16.2), le temps d'impulsion (t1) étant compris entre 5 ms et 1000 ms et le temps de pause (t2) étant compris entre 0 ms et 2000 s.

9. Système de freinage pneumatique à commande électronique (100a, 100b) selon l'une des revendications précédentes, **caractérisé en ce qu'**un étranglement (25) et/ou un réducteur de pression (40) est disposé entre le réservoir en fluide sous pression respectif (20A, 20B, 20C) et la soupape de dérivation monostable (16 ; 16.1, 16.2) pour limiter le débit volumique (Q) parvenant à la soupape de dérivation monostable (16 ; 16.1, 16.2) ou la pression de réservoir (pVA, pVB, pVC) parvenant à la soupape de dérivation monostable (16 ; 16.1, 16.2).

10. Système de freinage pneumatique à commande électronique (100a, 100b) selon l'une des revendications précédentes, **caractérisé en ce que** la soupape de dérivation monostable est conçue comme une vanne 3/2 voies à commande électronique (16 ; 16.1, 16.2), en particulier une électrovanne.

11. Système de freinage pneumatique à commande électronique (100a, 100b) selon l'une des revendications précédentes, **caractérisé en ce qu'**une soupape de sécurité (22) pouvant être mise sous tension en même temps que la soupape de dérivation monostable (16 ; 16.1, 16.2) est disposée entre la soupape de dérivation monostable (16 ; 16.1, 16.2) et le réservoir en fluide sous pression (20A, 20B, 20C) pour former une fonction de sécurité permettant d'empêcher la spécification de la pression de frein de service (p1 , p2, p3, p4) en fonction de la pression de réservoir (pVA, pVB, pVC) lorsque la deuxième position de commutation (Z2) de la soupape de dérivation monostable (16 ; 16.1, 16.2) est réglée de manière indésirable.

12. Procédé de commande électronique d'un système de freinage pneumatique (100a, 100b) selon l'une des revendications précédentes, le procédé comprenant au moins les étapes suivantes :
- déterminer la présence d'une panne ou d'un défaut lors de l'actionnement électronique des freins de service (1, 2, 3, 4), en particulier lors de la commande (SA, SB) des modulateurs d'essieu (9, 10) (St1) ;
- commander la soupape de dérivation monostable (16 ; 16.1, 16.2) par le biais du signal de dérivation (SU), dans le cas où une panne ou un défaut a été déterminé et où la soupape de frein à pied (11) n'est pas actionnée par le conducteur, pour actionner de manière électropneumatique et redondante les freins de roue (1, 2, 3, 4) (St2, St2,1) ;
- générer une pression de frein de service (p1, p2, p3, p4) en fonction de la pression d'actionnement (pF) spécifiée par la soupape de frein à pied (11) non actionnée et/ou en fonction de la pression de réservoir (pVA, pVB, pVC) (St3).

13. Procédé selon la revendication 12, **caractérisé en ce que** la soupape de dérivation monostable (16 ; 16.1, 16.2) est commandée électriquement, en cas de panne ou de défaut lors de l'actionnement électronique des freins de service (1, 2, 3, 4), par le biais d'un signal de dérivation (SU) spécifié par le dispositif de commande de dérivation (130),
la soupape de dérivation monostable (16 ; 16.1, 16.2) passant, lorsqu'elle n'est pas commandée par le signal de dérivation (SU), dans la première position de commutation hors tension (Z1) et, lorsqu'elle est commandée par le signal de dérivation (SU), dans la deuxième position de commutation sous tension (Z2).

14. Procédé selon la revendication 13, **caractérisé en ce que** le dispositif de commande de dérivation (130) spécifie le signal de dérivation (SU) en modulation de largeur d'impulsion, la soupape de dérivation monostable (16 ; 16.1, 16.2) étant ainsi commutée alternativement entre la première position de commutation (Z1) et la deuxième position de commutation (Z2),
la soupape de dérivation monostable (16 ; 16.1, 16.2) étant mise sous tension pendant le temps d'impulsion (t1) et hors tension pendant le temps de pause (t2) de sorte que la pression de frein de service (p1, p2, p3, p4) varie pour former la fonction de freinage saccadé (SF) .

15. Véhicule (200), notamment véhicule utilitaire (200), comprenant un système de freinage pneumatique à commande électronique (100a, 100b) selon l'une des revendications 1 à 11.
